(19) Europäisches Patentamt
European Patent Office
Office européen des brevets

(11) **EP 2 986 650 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(21) Anmeldenummer: **14718577.1**

(22) Anmeldetag: **16.04.2014**

(51) Int Cl.:
*C08F 2/26* (2006.01)     *C08F 265/04* (2006.01)
*C08F 279/02* (2006.01)   *C08F 285/00* (2006.01)
*C08L 25/12* (2006.01)    *C08L 55/02* (2006.01)

(86) Internationale Anmeldenummer:
**PCT/EP2014/057823**

(87) Internationale Veröffentlichungsnummer:
**WO 2014/170406 (23.10.2014 Gazette 2014/43)**

(54) **THERMOPLASTISCHE FORMMASSEN AUF BASIS VON ACRYLNITRIL, STYROL UND BUTADIEN**

THERMOPLASTIC MOULDING MATERIALS BASED ON ACRYLONITRILE, STYRENE AND BUTADIENE

MATIÈRES À MOULER THERMOPLASTIQUES À BASE D'ACRYLNITRILE, STYRÈNE ET BUTADIÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2013 EP 13164275**

(43) Veröffentlichungstag der Anmeldung:
**24.02.2016 Patentblatt 2016/08**

(73) Patentinhaber: **INEOS Styrolution Group GmbH 60325 Frankfurt (DE)**

(72) Erfinder:
• NIESSNER, Norbert
  67159 Friedelsheim (DE)
• AHN, SangJun
  Seoul, 05658 (KR)
• BANASZAK, Brian J.
  68161 Mannheim (DE)
• WALKER, Roland
  49076 Osnabrück (DE)

• PEPERS, Michel
  NL-5941 JH Velden (NL)
• BARTH, Johannes
  63110 Rodgau (DE)
• MICHELS, Gisbert
  51375 Leverkusen (DE)
• PATCAS, Florian
  67065 Ludwigshafen (DE)
• HWANG, YoungHwa
  Ulsan 680-180 (KR)
• VERSTRAETEN, Rudy
  B-2340 Beerse (BE)

(74) Vertreter: **Jacobi, Markus Alexander Isenbruck Bösl Hörschler LLP Eastsite One Seckenheimer Landstrasse 4 68163 Mannheim (DE)**

(56) Entgegenhaltungen:
EP-A2- 0 579 140        DE-A1- 19 752 394
DE-A1-102005 022 632    DE-A1-102005 022 635

EP 2 986 650 B1

**Beschreibung**

Die Erfindung betrifft thermoplastische Formmassen auf Basis von Acrylnitril-Butadien-Styrol (ABS) mit verbesserten mechanischen und optischen Eigenschaften, darin enthaltene Pfropfcopolymere und ein Verfahren zu deren Herstellung und deren Verwendung.

Es ist seit Jahrzehnten bekannt, thermoplastische Formmassen herzustellen, indem man Styrol-Acrylnitril-Copolymerisate durch Einarbeiten von Kautschuken modifiziert. Dies geschieht zum Beispiel durch Pfropfmischpolymerisation von Styrol und Acrylnitril in Gegenwart eines Kautschuks sowie durch nachträgliches Abmischen dieses Pfropfcopolymerisats mit einer separat hergestellten polymeren Matrix, die zum Beispiel aus einem Styrol-Acrylnitril-Copolymerisat oder einem Methylstyrol-Acrylnitril-Copolymerisat bestehen kann.

Aus EP-A 0 022 200 ist es bekannt, thermoplastische Formmassen herzustellen, die eine Copolymer-Matrix aus Styrol und Acrylnitril sowie ein Pfropfcopolymerisat aus einem Kautschuklatex, Styrol und Acrylnitril enthalten. Dabei wird zunächst ein Polybutadien-Latex durch radikalische Polymerisation unter Einsatz von Kaliumperoxodisulfat als Initiator hergestellt. Dieser Kautschuklatex wird dann einer Agglomeration unterzogen, die dazu dient, die Kautschukpartikel zu vergrößern. Diese Agglomeration kann beispielsweise durch eine Umsetzung des Kautschuklatex mit einer Emulsion eines Copolymeren aus Ethylacrylat und Methacrylsäureamid erfolgen. Anschließend erfolgt die Herstellung des Pfropfkautschuks dann durch Umsetzung des agglomerierten Kautschuklatex mit Styrol und Acrylnitril unter Einsatz eines Initiators.

Dem Fachmann ist ferner bekannt, dass die Größe der Kautschukpartikel einen wesentlichen Einfluss auf die physikalischen Eigenschaften der thermoplastischen Formmassen hat. Aus produktionstechnischen Gründen kann es sich als vorteilhaft erweisen, zunächst einen Kautschuklatex mit einer kleinen Partikelgröße der Kautschukteilchen herzustellen und in einem anschließenden Schritt durch ein Verfahren der Agglomeration die Partikelgröße der Kautschukteilchen zu vergrößern. Eine Schwierigkeit bei dem Schritt der Agglomeration besteht jedoch darin, dass die entstehende Dispersion oftmals neben den erwünschten Agglomerationsprodukten auch nicht agglomerierte Teilchen sowie ein Koagulat, gegebenenfalls mit sehr großen Teilchen enthält.

Dieses Koagulat kann die mechanischen Eigenschaften der thermoplastischen Formmassen negativ beeinflussen. Bei einer Abtrennung des Koagulats ergibt sich ein gegebenenfalls deutlicher Substanzverlust. Darüber hinaus ist man an einer möglichst hohen Ausbeute an Partikeln mit der gewünschten Teilchengröße interessiert, was insbesondere bei großtechnischen Anlagen von besonderer Bedeutung ist.

In EP-A 0 077 038 wird die Agglomeration eines dispergierten Kautschuks in Gegenwart einer Dispersion eines Säuregruppen enthaltenden Latex sowie in Gegenwart eines neutralen Elektrolyten beschrieben. Da der Agglomerationslatex freie Säuregruppen enthält, muss die Agglomeration bei einem nicht-sauren pH-Wert ausgeführt werden. Dieses Verfahren hat den Nachteil, dass die Effektivität der Agglomeration stark durch Schwankungen des pH-Werts beeinflusst wird, so dass der pH-Wert sehr genau eingehalten werden muss, um reproduzierbare Ergebnisse zu erhalten.

Aus EP-A 1 305 345 kennt der Fachmann ein weiteres Verfahren zur Agglomeration eines Butadien-Kautschuks, bei dem die Agglomeration in Gegenwart eines basischen Elektrolyten durchgeführt wird, beispielsweise in Gegenwart von Kaliumhydroxid.

WO 2008/020012 beschreibt einen Butadien-Kautschuklatex, enthaltend 0 bis 10 Gew.-% Styrol, als Pfropfgrundlage, der mit Hilfe eines Acrylesterpolymers, insbesondere einem Copolymer aus Ethylacrylat und Methylacrylamid, agglomeriert wird. Ferner werden daraus hergestellte Pfropfcopolymere, gepfropft mit Styrol und Acrylnitril (SAN), und thermoplastische Formmassen mit verbesserter Schlagzähigkeit, enthaltend ein solches Pfropfcopolymer und Poly(styrol-co-acrylnitril) PSAN als Matrixpolymer beschrieben. Die agglomerierte Pfropfgrundlage kann eine bimodale Teilchengrößenverteilung mit $d_{50}$-Werten von 80 bis 120 nm und 350 bis 550 nm aufweisen. Die Polydispersität U der Teilchen wird nicht thematisiert.

Die DE 10 2005 022 632 A1 beschreibt einen teilchenförmigen Agglolatex, eine damit agglomerierte Polybutadienkautschukdispersion und einen entsprechenden SAN-Pfropfkautschuk, sowie eine thermoplastische Formmasse aus PSAN enthaltend den Pfropfkautschuk. Als Agglolatex wird vorzugsweise ein Copolymer aus Ethylacrylat und Methacrylamid eingesetzt. Besonders bevorzugt weist der Agglolatex eine Uneinheitlichkeit U von $\leq 0{,}35$ und einen $d_{50}$-Wert von 65 bis 150 nm auf. Weiterhin werden mit Hilfe des Agglolatex hergestellte teilchenförmige Kautschuke mit einer bimodalen Teilchengrößenverteilung enthaltend nicht agglomerierte Teilchen und eine Fraktion agglomerierter Teilchen beschrieben. Die Fraktion agglomerierter Teilchen weist ganz besonders bevorzugt eine Uneinheitlichkeit U von $\leq 0{,}7$ und besonders bevorzugt einen $d_{50}$-Wert von > 400 nm auf. Beispielhaft eingesetzt werden Kautschuke auf Basis von Butadien und 7 Gew.-% Styrol.

Die DE 10 2005 022 635 A1 beschreibt einen Agglolatex, insbesondere ein Copolymer aus Ethylacrylat und Methacrylamid, mit einer Uneinheitlichkeit U von $\leq 0{,}35$ und einem $d_{50}$-Wert von 80 bis 190 nm. Ein damit agglomerierter Emulsionskautschuk weist mindestens eine Fraktion agglomerierter Teilchen mit einer Uneinheitlichkeit U von < 0,35 auf, besonders bevorzugt < 0,30, und einen $d_{50}$-Wert von > 300 nm, bevorzugt > 400 nm, auf. Ferner wird ein Kautschuk auf Basis von Butadien und 7 Gew.-% Styrol mit einer SAN-Pfropfauflage, enthaltend eine agglomerierte Kautschukfraktion mit einer Uneinheitlichkeit von 0,33 und einem $d_{50}$-Wert von 630, beschrieben, sowie eine diesen enthaltende thermoplastische Formmasse aus PSAN.

Die mechanischen Eigenschaften wie Charpy-Kerbschlagzähigkeit gemäß des vorgenannten Standes der Technik hergestellter Formmassen mit Styrol-Acrylnitril-Copolymeren sind weiterhin verbesserungsbedürftig.

Eine Aufgabe der vorliegenden Erfindung besteht darin, thermoplastische ABS-Formmassen mit verbesserter Schlagzähigkeit bereitzustellen, die sich durch ein technisch einfach durchzuführendes Verfahren herstellen lassen.

Gegenstand der Erfindung ist ein Pfropfcopolymer B, aufgebaut aus:

B1: 40 bis 85 Gew.-%, bezogen auf den Feststoffgehalt des Pfropfcopolymers B, einer Pfropfgrundlage (B1), erhältlich durch (a) Polymerisation von:

(B11): 10,5 bis 24,5 Gew.-%, bezogen auf die Pfropfgrundlage B1, mindestens eines Vinylaromats, insbesondere Styrol, und
(B12): 75,5 bis 89,5 Gew.-%, bezogen auf die Pfropfgrundlage B1, mindestens eines Diens, insbesondere Butadien,

wobei (B11) und (B12) 100 Gew.-% ergeben;

und (b) Agglomeration der erhaltenen Pfropfgrundlage B1 durch Zugabe von

(C): 0,01 bis 5 Gew.-Teilen, bezogen auf 100 Gew.-Teile der Pfropfgrundlage B1, jeweils bezogen auf den Feststoffgehalt, eines agglomerierend wirkenden Copolymers (C) aus:

(C1): 80 bis 99,9 Gew.-% ein oder mehreren hydrophoben $C_1$- bis $C_{12}$-Alkylacrylaten oder $C_1$- bis $C_{12}$-Alkylmethacrylaten und
(C2): 0,1 bis 20 Gew.-% ein oder mehreren hydrophilen Comonomeren bestehend aus der Gruppe Acrylamid, Methylacrylamid, Ethylacrylamid und n-Butylacrylamid,

wobei (C1) und (C2) 100 Gew.-% ergeben; und

B2: 15 bis 60 Gew.-%, bezogen auf den Feststoffgehalt des Pfropfcopolymers B, einer Pfropfhülle erhältlich durch Umsetzung der agglomerierten Pfropfgrundlage B1 mit einer Mischung von:

(B21) 70 bis 90 Gew.-%, bezogen auf die Pfropfhülle (B2), Styrol und/oder α-Methylstyrol, insbesondere Styrol, und
(B22) 10 bis 30 Gew.-%, bezogen auf die Pfropfhülle (B2), Acrylnitril und/oder Methylmethacrylat, insbesondere Acrylnitril,

wobei die Gesamtsumme aus Pfropfgrundlage B1 und Pfropfhülle B2 100 Gew.-% ergibt;

dadurch gekennzeichnet, dass

(i) das agglomerierend wirkende Copolymer (C) eine Polydispersität U von 0,26 bis 0,20 und einen $d_{50}$-Wert von 110 bis 140 nm, insbesondere 115 bis 140 nm, aufweist, und
(ii) die agglomerierte Pfropfgrundlage B1 eine bimodale Teilchengrößenverteilung von einer Fraktion x) nicht agglomerierter Teilchen mit einem $d_{50}$-Wert im Bereich von 80 bis 120 nm und einer Fraktion y) agglomerierter Teilchen mit einem $d_{50}$-Wert im Bereich von 350 bis 450 nm und einer Polydispersität U von kleiner 0,28 aufweist.

Der Teilchendurchmesser $d_{50}$, der auch als $d_{50}$-Wert der integralen Massenverteilung bezeichnet wird, ist dabei als der Wert definiert, bei dem 50 Gew.-% der Teilchen einen kleineren und 50 Gew.-% der Teilchen einen größeren Durchmesser als der $d_{50}$-Wert aufweisen.

In der vorliegenden Anmeldung wird der gewichtsmittlere Teilchendurchmesser $d_w$ mit einer Scheibenzentrifuge (z.B.: DC 24000 von CPS Instruments Inc. mit einer Rotationsgeschwindigkeit der Scheibe von 24000 UpM) bestimmt. Der gewichtsmittlere Teilchendurchmesser $d_w$ ist gemäß folgender Formel (siehe G. Lagaly, O. Schulz und R. Ziemehl, Dispersionen und Emulsionen: eine Einführung in die Kolloidik feinverteilter Stoffe einschließlich der Tonminerale, Darmstadt: Steinkopf-Verlag 1997, ISBN 3-7985 -1087-3, Seite 282, Formel 8.3b definiert:

$$d_w = \text{Summe} ( n_i * d_i^4 ) / \text{Summe}( n_i * d_i^3 )$$

$n_i$: Anzahl der Partikel mit dem Durchmesser $d_i$

Die Uneinheitlichkeit U im Sinne der vorliegenden Anmeldung ist ein Maß für die Breite der Teilchengrößenverteilung innerhalb eines teilchenförmigen (Co)polymers bzw. einer Fraktion eines teilchenförmigen (Co)polymers. Die Uneinheitlichkeit wird im Sinne der vorliegenden Anmeldung definiert als $U = (d_{90}-d_{10})/d_{50}$. Je kleiner der Wert U ist, desto enger ist die Verteilung.

Pfropfgrundlage (B1)

Als Dien-Komponente (B12) kann beispielsweise Isopren und/oder Butadien eingesetzt werden, bevorzugt wird Butadien eingesetzt.

Als Komponente (B11) kann alpha-Methylstyrol und/oder Styrol eingesetzt werden, bevorzugt wird nur Styrol eingesetzt.

Für die Pfropfgrundlage B1 wird im Allgemeinen die Dien-Komponente (B12) in einer Menge von 75,5 bis 89,5 Gew.-%, insbesondere 76 bis 89 Gew.-%, bevorzugt 78 bis 88 Gew.-%, ganz besonders bevorzugt 79 bis 86 Gew.-%, und die Vinylaromatkomponente (B11) in einer Menge von 10,5 bis 24,5, insbesondere 11 bis 24 Gew.-%, bevorzugt 12 bis 22 Gew.-%, ganz besonders bevorzugt 14 bis 21 Gew.-% eingesetzt.

Bevorzugt ist eine Pfropfgrundlage B1 aus Butadien und Styrol in der vorgenannten Zusammensetzung.

Zur Herstellung der Pfropfgrundlage (B1) werden die Komponenten (B12) und (B11) in wässriger Emulsion nach dem Fachmann bekannten Verfahren bei Temperaturen von im Allgemeinen 20 bis 100 °C, bevorzugt 50 bis 90 °C polymerisiert.

Nach einer bevorzugten Ausführungsform erfolgt die Monomerzugabe so, dass zunächst nur Vinylaromat (B11), insbesondere Styrol, in einer Menge von 3 bis 10 Gew.-%, in Bezug auf die Gesamt-Monomer-Menge (B11) und (B12), zugegeben und polymerisiert wird. Danach erfolgt die Zugabe und Polymerisation einer Mischung aus Dien (B12) und restlichem Vinylaromat (B11).

Bei der Polymerisation können die üblichen Emulgatoren wie Alkalisalze von Alkyl- oder Arylsulfonsäuren, Alkylsulfate, Fettalkoholsulfonate, Salze höherer Fettsäuren mit 10 bis 30 Kohlenstoffatomen oder Harzseifen verwendet werden. Bevorzugt setzt man die Natrium- oder Kaliumsalze von Alkylsulfonaten oder Fettsäuren mit 10 bis 18 Kohlenstoffatomen ein. Es ist günstig, die Emulgatoren in einer Menge von 0,5 bis 5 Gew.-%, bevorzugt von 0,5 bis 2 Gew.-%, bezogen auf das Gesamtgewicht der für die Pfropfgrundlage (B1) verwendeten Monomeren, einzusetzen. Im Allgemeinen wird bei einem Wasser/Monomer-Verhältnis von 2 : 1 bis 0,7 : 1 gearbeitet.

Als Polymerisationsinitiatoren dienen insbesondere die gebräuchlichen Persulfate wie Kaliumperoxodisulfat, geeignet sind jedoch auch Redoxsysteme.

Die Mengen an Initiatoren, zum Beispiel 0,1 bis 1 Gew.-%, bezogen auf das Gesamtgewicht der zur Herstellung der Pfropfgrundlage (B1) eingesetzten Monomeren, richtet sich nach dem gewünschten Molgewicht.

Als Polymerisationshilfsstoffe können die üblichen Puffersubstanzen, durch welche pH-Werte von bevorzugt 6 bis 10 eingestellt werden, zum Beispiel Natriumbicarbonat und Natriumpyrophosphat, sowie im Allgemeinen 0,1 bis 3 Gew.-% eines Molekulargewichtsreglers wie Mercaptan, Terpinol oder dimeres $\alpha$-Methylstyrol verwendet werden.

Die genauen Polymerisationsbedingungen, insbesondere Art, Dosierung und Menge des Emulgators werden innerhalb der oben angegebenen Bereiche so gewählt, dass die Pfropfgrundlage (B1) einen wie nachstehend definierten $d_{50}$-Wert aufweist, wie zum Beispiel in DE-A-2427960 beschrieben.

Die Pfropfgrundlage B1 weist im Allgemeinen einen $d_{50}$-Wert im Bereich von 80 bis 120 nm, besonders bevorzugt 80 bis 110 nm, auf.

Die Polydispersität U der Pfropfgrundlage B1 ist vorzugsweise kleiner 0,35, insbesondere kleiner 0,33.

Bevorzugt ist eine Pfropfgrundlage mit einem $d_{50}$-Wert im Bereich von 80 bis 120 nm und einer Polydispersität U von kleiner 0,35, insbesondere kleiner 0,33.

Wie bereits oben erwähnt wird in der vorliegenden Anmeldung die Bestimmung des gewichtsmittleren Teilchendurchmessers $d_w$ mit Hilfe einer Scheibenzentrifuge (z.B.: DC 24000 von CPS Instruments Inc. mit einer Rotationsgeschwindigkeit der Scheibe von 24000 UpM) durchgeführt. Der gewichtsmittlere durchschnittliche Teilchendurchmesser $d_w$ ist gemäß folgender Formel (siehe G. Lagaly, O. Schulz und R. Ziemehl, Dispersionen und Emulsionen: eine Einführung in die Kolloidik feinverteilter Stoffe einschließlich der Tonminerale, Darmstadt: Steinkopf-Verlag 1997, ISBN 3-7985 -1087-3, Seite 282, Formel 8.3b) definiert:

$$d_w = \text{Summe} ( n_i * d_i^4 ) / \text{Summe}( n_i * d_i^3 )$$

$n_i$: Anzahl der Partikel mit dem Durchmesser $d_i$

Die Summation wird vom kleinsten bis zum größten Durchmesser der Teilchengrößenverteilung durchgeführt. Es sollte erwähnt werden, dass für eine Teilchengrößenverteilung von Teilchen mit der gleichen Dichte, der volumenmittlere Teilchendurchmesser $d_v$ gleich dem gewichtsmittleren Teilchendurchmesser $d_w$ ist.

Der mittlere Teilchendurchmesser, der auch als $d_{50}$-Wert der integralen Massenverteilung bezeichnet wird, ist dabei als der Wert definiert, bei dem 50 Gew.-% der Teilchen einen kleineren und 50 Gew.-% der Teilchen einen größeren Durchmesser als der $d_{50}$-Wert aufweisen.

$d_{10}$ und $d_{90}$-Werte werden wie folgt definiert: $d_{10}$ ist der Durchmesser, bei welchem 10 Gew.-%. der Partikel kleiner sind als dieser Wert und $d_{90}$ ist der Durchmesser, bei dem 90 Gew.-% der Partikel kleiner sind als dieser Wert.

Die Uneinheitlichkeit oder Polydispersität U im Sinne der vorliegenden Anmeldung ist ein Maß für die Breite der Teilchengrößenverteilung innerhalb eines teilchenförmigen (Co)polymers bzw. einer Fraktion eines teilchenförmigen (Co)polymers. Die Polydispersität U wird im Sinne der vorliegenden Anmeldung definiert als U $=(d_{90}-d_{10})/d_{50}$. Je kleiner der Wert U ist, desto enger ist die Verteilung.

Agglomerierend wirkende Komponente (C)

Zur Agglomeration der Pfropfgrundlage (B1) wird eine agglomerierend wirkende Komponente (C), ein Copolymer aus (C1) ein- oder mehreren hydrophoben $C_1$- bis $C_{12}$-Alkylacrylaten oder $C_1$- bis $C_{12}$-Alkylmethacrylaten und (C2) ein- oder mehreren hydrophilen Comonomeren aus der Gruppe bestehend aus Acrylamid, Methylacrylamid, Ethylacrylamid und n-Butylacrylamid, eingesetzt. Die agglomerierend wirkende Komponente (C) weist erfindungsgemäß eine Polydispersität U von 0,26 bis 0,20 und einen $d_{50}$-Wert von 110 bis 140 nm auf.

Die Zusammensetzung des Copolymers (C) ist im Allgemeinen folgendermaßen:

(C1) 80 bis 99,9, bevorzugt 90 bis 99,9 Gew.-% der Komponente (C1) und

(C2) 0,1 bis 20, bevorzugt 0,1 bis 10 Gew.-% der Komponente (C2),

wobei die Summe der Monomeren (C1) und (C2) gerade 100 Gew.-% beträgt.

Als Monomere (C1) werden vorzugsweise $C_1$-$C_4$-Alkylacrylate oder auch deren Mischungen verwendet. Ethylacrylat wird als Monomer (C1) bevorzugt.

Als Monomer (C2) bevorzugt ist Methacrylamid.

Bevorzugt ist dabei ein Copolymer (C) aus Ethylacrylat und Methylacrylamid. Besonders bevorzugt ist ein Copolymer (C) aus 92 bis 98 Gew.-%, bezogen auf die Gesamtfeststoffe in (C), Ethylacrylat und 2 bis 8 Gew.-%, bezogen auf die Gesamtfeststoffe in (C), Methylacrylamid.

Ganz besonders bevorzugt ist ein Copolymer (C) aus 93 bis 97 Gew.-%, bezogen auf die Gesamtfeststoffe in (C), Ethylacrylat und 3 bis 7 Gew.-%, bezogen auf die Gesamtfeststoffe in (C), Methylacrylamid.

Bevorzugt sind Copolymere (C) mit einem Molekulargewicht ($M_w$) von 30.000 bis 300.000 g/mol.

Besonders bevorzugt ist ein vorstehend beschriebenes Copolymer (C), das einen Kern aufweist, der aus mindestens einem der als Komponente (C1) genannten hydrophoben Monomere aufgebaut ist, bevorzugt aus Ethylacrylat, wobei dieser Kern mit einem Copolymer gepfropft ist, das aus den Komponenten (C1) und (C2) aufgebaut ist.

Besonders bevorzugt ist das Copolymer C aufgebaut aus

($c_{11}$) 5 bis 20 Gew.-%, bezogen auf die Gesamtmenge des Copolymers C, eines oder mehrerer hydrophober Monomere (C1), bevorzugt Ethylacrylat, als Kern;

($c_{12}$) 80 bis 95 Gew.-%, bezogen auf die Gesamtmenge des Copolymers C, einer auf den Kern aufgepfropften Schale, aufgebaut aus

($c_{121}$) 93 bis 97 Gew.-%, bezogen auf die Gesamtmenge der die Schale bildenden Monomeren, mindestens eines hydrophoben Monomeren (C1), bevorzugt Ethylacrylat;

($c_{122}$) 3 bis 7 Gew.-%, bezogen auf die Gesamtmenge der die Schale bildenden Monomeren, mindestens eines hydrophilen Monomeren (C2), bevorzugt Methacrylamid.

Ganz besonders bevorzugt ist das Copolymer C aufgebaut aus

($c_{11}$) 8 bis 12 Gew.-%, bezogen auf die Gesamtmenge des Copolymers C, Ethylacrylat als Kern, und

($c_{12}$) 88 bis 92 Gew.-%, bezogen auf die Gesamtmenge des Copolymers C, einer auf den Kern aufgepfropften Schale aufgebaut aus

($c_{121}$) 93 bis 97 Gew.-%, bezogen auf die Gesamtmenge der die Schale bildenden Monomere, Ethylacrylat und

($c_{122}$) 3 bis 7 % bezogen auf die Gesamtmenge der die Schale bildenden Monomere, Methacrylamid.

Bevorzugt ist entsprechend ein Verfahren zur Herstellung der agglomerierend wirkenden Komponente (C), enthaltend Monomerkomponenten (C1) und (C2), insbesondere Ethylacrylat und Methylacrylamid, bei dem man zunächst eine Teilmenge an (C1), insbesondere Ethylacrylat, polymerisiert (Bildung der Grundlage) sowie anschließend die restliche Teilmenge an (C1), insbesondere Ethylacrylat, und (C2), insbesondere Methylacrylamid, als Mischung zugibt. Die Teilmengen entsprechen den vorstehend beschriebenen Mengenverhältnissen.

Die Herstellung des erfindungsgemäß eingesetzten agglomerierend wirkenden Copolymers C kann nach dem Fachmann bekannten Verfahren erfolgen, besonders vorteilhaft durch Emulsionspolymerisation, wobei die vorstehend für die Pfropfgrundlage B1 genannten Emulgatoren eingesetzt werden können.

Dabei werden erfindungsgemäß bevorzugt die Natrium- und Kaliumsalze von Alkylsulfonaten mit 10 bis 18 Kohlenstoffatomen eingesetzt. Es ist günstig, die Emulgatoren in einer Menge von 0,5 bis 5 Gew.-%, bevorzugt 0,5 bis 2 Gew.-%, bezogen auf den Gesamtmonomergehalt des Copolymers (C).

Weiterer Gegenstand der Erfindung ist ein Verfahren zur Herstellung der vorstehend beschriebenen Kern/Schale-Copolymere (C) durch eine Emulsionspolymerisation umfassend die Schritte:

(x) Emulsionspolymerisation mindestens eines Monomeren (C1) wie vorstehend definiert in einem ersten Schritt und

(y) Zugabe eines Monomerengemisches umfassend Monomere (C1 + C2) in einem weiteren Schritt,

wobei die Schritte (x) und (y) in Gegenwart mindestens eines Emulgators erfolgen, der in Schritt (x) in einer Menge von 0,05 bis 0,50 Gew.-%, bevorzugt 0,05 bis 0,20 Gew.-%,

und in Schritt (y) in einer Menge von 0,45 bis 4,50 Gew.-%, bevorzugt 0,45 bis 1,80 Gew.-%, jeweils bezogen auf den Gesamtmonomergehalt, eingesetzt wird.

Als Emulgator in dem vorgenannten erfindungsgemäßen Verfahren haben sich ebenfalls die Natrium- und Kaliumsalze von Alkylsulfonaten mit 10 bis 18 Kohlenstoffatomen als vorteilhaft erwiesen.

Weiterer Gegenstand der Erfindung sind durch das vorgenannte Verfahren erhältliche Kern/Schale-Copolymere (C).

Bevorzugt wird das Copolymer (C) als wässrige Dispersion, als so genannter Agglomerationslatex, eingesetzt.

Bevorzugt weist das agglomerierend wirkende Copolymer (C) eine Polydispersität U von kleiner 0,26, besonders bevorzugt von kleiner 0,25 auf.

Gemäß einer Ausführungsform liegt die Polydispersität U des agglomerierend wirkenden Copolymers (C) im Bereich von 0,26 bis 0,20, insbesondere im Bereich von 0,25 bis 0,21.

Das agglomerierend wirkende Copolymer (C) weist einen $d_{50}$-Wert von 110 bis 140 nm, bevorzugt von 115 bis 140 nm, besonders bevorzugt 120 bis 135 nm auf.

Gemäß einer bevorzugten Ausführungsform wird ein agglomerierend wirkendes Copolymer (C) mit einer Polydispersität U von kleiner 0,26, insbesondere von kleiner 0,25, und einem $d_{50}$-Wert von 110 bis 140 nm, insbesondere von 115 bis 140 nm, ganz besonders bevorzugt von 120 bis 135 nm, eingesetzt.

Gemäß einer Ausführungsform wird ein agglomerierend wirkendes Copolymer (C) mit einer Polydispersität U im Bereich von 0,26 bis 0,20, insbesondere im Bereich von 0,25 bis 0,21 und einem $d_{50}$-Wert von 110 bis 140 nm, insbesondere von 115 bis 140 nm, besonders bevorzugt von 120 bis 135 nm, eingesetzt.

Im Sinne der vorliegenden Anmeldung sind die vorgenannten Ausführungsformen miteinander kombinierbar.

Bevorzugt eingesetzt wird ein Copolymer (C) aus 92 bis 98 Gew.-%, bezogen auf die Gesamtfeststoffe in (C), Ethylacrylat und 2 bis 8 Gew.-%, bezogen auf die Gesamtfeststoffe in (C), Methylacrylamid mit einer Polydispersität U von kleiner 0,26, insbesondere von kleiner 0,25, und einem $d_{50}$-Wert von 110 bis 140 nm, insbesondere von 115 bis 140 nm, ganz besonders bevorzugt von 120 bis 135 nm.

Weiterhin bevorzugt eingesetzt wird ein Copolymer (C) aus 92 bis 98 Gew.-%, bezogen auf die Gesamtfeststoffe in (C), Ethylacrylat und 2 bis 8 Gew.-%, bezogen auf die Gesamtfeststoffe in (C), Methylacrylamid mit einer Polydispersität U im Bereich von 0,26 bis 0,20, insbesondere im Bereich von 0,25 bis 0,21, und einem $d_{50}$-Wert von 110 bis 140 nm, insbesondere von 115 bis 140 nm, ganz besonders bevorzugt von 120 bis 135 nm.

Besonders bevorzugt eingesetzt wird ein Copolymer (C) aus 93 bis 97 Gew.-%, bezogen auf die Gesamtfeststoffe in (C), Ethylacrylat und 3 bis 7 Gew.-%, bezogen auf die Gesamtfeststoffe in (C), Methylacrylamid mit einer Polydispersität U von kleiner 0,26, insbesondere von kleiner 0,25, und einem $d_{50}$-Wert von 110 bis 140 nm, insbesondere von 115 bis 140 nm, ganz besonders bevorzugt von 120 bis 135 nm.

Weiterhin besonders bevorzugt eingesetzt wird ein Copolymer C aufgebaut aus

($c_{11}$) 8 bis 12 Gew.-%, bezogen auf die Gesamtmenge des Copolymers C, Ethylacrylat als Kern, und

($c_{12}$) 88 bis 92 Gew.-%, bezogen auf die Gesamtmenge des Copolymers C, einer auf den Kern aufgepfropften Schale aufgebaut aus

($c_{121}$) 93 bis 97 Gew.-%, bezogen auf die Gesamtmenge der die Schale bildenden Monomere, Ethylacrylat und

($c_{122}$) 3 bis 7 % bezogen auf die Gesamtmenge der die Schale bildenden Monomere, Methacrylamid,

das eine Polydispersität U im Bereich von 0,26 bis 0,20, insbesondere im Bereich von 0,25 bis 0,21 und einen $d_{50}$-Wert von 110 bis 140 nm, insbesondere von 115 bis 140 nm, ganz besonders bevorzugt von 120 bis 135 nm, aufweist.

Agglomeration der Pfropfgrundlage (B1)

Die Agglomeration der Pfropfgrundlage (B1) geschieht in der Regel durch Zugabe einer Dispersion des zuvor beschriebenen Copolymers (C). Die Konzentration des Copolymers (C) in der zur Agglomeration verwendeten Dispersion soll im allgemeinen zwischen 3 bis 60 Gew.-%, vorzugsweise zwischen 5 bis 40 Gew.-%, liegen.

Bei der Agglomeration werden in der Regel 0,1 bis 5 Gew.-Teile, vorzugsweise 0,5 bis 3 Gew.-Teile, der Dispersion des Copolymers C auf 100 Teile der Pfropfgrundlage B1, jeweils berechnet auf Feststoffe, eingesetzt.

Die Agglomeration wird im Allgemeinen bei einer Temperatur von 20 bis 120°C, bevorzugt von 30 bis 100°C, besonders bevorzugt von 30 bis 75°C, durchgeführt. Die Zugabe von C kann auf einmal oder portionsweise, kontinuierlich oder mit einem Zulaufprofil über einen bestimmten Zeitraum erfolgen. Nach einer bevorzugten Ausführungsform erfolgt die Zugabe von C derart, dass pro Minute 1/1 bis 1/100 der Gesamtmenge von C eingetragen werden. Die Agglomerierzeit, d.h. die Zeit ab Beginn der Zugabe von C bis zum Start der nachfolgenden Pfropfcopolymerisation, beträgt bevorzugt von einer Minute bis mehrere Stunden, beispielsweise bis 2 Stunden, besonders bevorzugt von 10 bis 60 Minuten.

Gegebenenfalls können zur Agglomeration basische Elektrolyte in einer Menge von 1 bis 50 Gew.-% (bezogen auf 100 Gew.-% des Feststoffgehalts des Copolymers C), zugesetzt werden. Als basische Elektrolyte kommen organische oder anorganische Hydroxide in Betracht. Anorganische Hydroxide kommen vor allem in Betracht. Besonders bevorzugt werden Lithiumhydroxid, Natriumhydroxid oder Kaliumhydroxid, eingesetzt. Nach einer der besonders bevorzugten Ausführungsformen wird KOH als basischer Elektrolyt verwendet. Nach einer anderen bevorzugten Ausführungsform wird NaOH als basischer Elektrolyt eingesetzt.

Es können aber auch Mischungen aus zwei oder mehr basischen Elektrolyten eingesetzt werden. Dies kann beispielsweise dann vorteilhaft sei, wenn das Wachstum der Kautschukpartikel genau gesteuert werden soll. So kann es zum Beispiel günstig sein, Mischungen aus LiOH mit KOH oder Mischungen aus LiOH mit NaOH einzusetzen. Mischungen aus KOH und NaOH zu verwenden ist ebenfalls möglich und zählt zu einer weiteren bevorzugten Ausführungsform. Im Allgemeinen werden die Elektrolyte vor der Zugabe gelöst. Bevorzugtes Lösungsmittel ist die wässrige Phase.

Bevorzugt werden verdünnte Lösungen verwendet, zum Beispiel Lösungen einer Konzentration im Bereich von 0,001 bis 0,1, insbesondere von 0,001 bis 0,05, bevorzugt weniger als 0,03, beispielsweise weniger als 0,025 g basischer Elektrolyt/ml Lösungsmittel.

Die Zugabe der basischen Elektrolyte kann vor der Zugabe des Copolymers C, gleichzeitig zusammen oder getrennt von diesem oder nach Zugabe von B1 erfolgen. Es ist auch möglich die basischen Elektrolyten in der Dispersion von C vorzumischen.

Nach einer bevorzugten Ausführungsform erfolgt die Zugabe der basischen Elektrolyten vor der Zugabe des Agglomerationspolymerisates. In der Regel wird der basische Elektrolyt in einer Menge im Bereich von 0,01 bis 4 Gew.-%, bevorzugt 0,05 bis 2,5, insbesondere 0,1 bis 1,5 Gew.-% bezogen auf den Kautschuk B (Feststoff), eingesetzt.

Der pH-Wert während der Agglomerisation beträgt im Allgemeinen von 6 bis 13. Nach einer bevorzugten Ausführungsform beträgt der pH-Wert von 8 bis 13.

Agglomerierte Pfropfgrundlage B1

Die nach der Agglomeration erhaltene agglomerierte Pfropfgrundlage B1 weist eine bimodale Teilchengrößenverteilung von Fraktionen x) und y) auf, wobei x) eine Fraktion nicht agglomerierter Teilchen und y) eine Fraktion agglomerierter Teilchen mit einem $d_{50}$-Wert im Bereich von 350 bis 450 nm und einer Polydispersität U von 0,27 bis 0,20 ist. Die nicht agglomerierten Teilchen der Fraktion x) weisen im Allgemeinen einen $d_{50}$-Wert im Bereich von 80 bis 120 nm auf.

Der Gewichtsanteil der Teilchen der Fraktion x) der agglomerierten Pfropfgrundlage B1 beträgt im Allgemeinen 15 bis 40 Gew.-%, bevorzugt 20 bis 30 Gew.-%, und der Anteil der Teilchen der Fraktion y) 60 bis 85 Gew.-%, bevorzugt 70 bis 80 Gew.-%, in Bezug auf die Gesamtmasse der Teilchen, x) und y) ergeben zusammen 100 Gew.-%.

Bevorzugt weist die agglomerierte Pfropfgrundlage B1 eine y) Fraktion agglomerierter Teilchen mit einem $d_{50}$-Wert im Bereich von 350 bis 450 nm, bevorzugt 350 bis 400 nm, und/oder eine Polydispersität U von kleiner 0,27, insbesondere kleiner 0,26 auf.

Die erhaltene Dispersion der agglomerierten Pfropfgrundlage B1 ist verhältnismäßig stabil und kann ohne weiteres gelagert und transportiert werden, ohne dass Koagulation eintritt.

Aus der agglomerierten Pfropfgrundlage B1 werden erfindungsgemäße Pfropfcopolymere B hergestellt.

Pfropfcopolymer B

Zur Herstellung der erfindungsgemäßen Pfropfcopolymere B wird die agglomerierte Pfropfgrundlage B1 mit den Monomeren B21 und B22 gepfropft.

Das Pfropfcopolymer B enthält im Allgemeinen 40 bis 85 Gew.-%, bezogen auf den Feststoffgehalt des Pfropfcopolymers B, einer Pfropfgrundlage (B1) und 15 bis 60 Gew.-%, bezogen auf den Feststoffgehalt des Pfropfcopolymers B, einer Pfropfhülle (B2). Die Summe aus B1 und B2 ergibt 100 Gew.-%.

Die Pfropfhülle (B2) kann erhalten werden durch Umsetzung von (B21) 70 bis 90 Gew.-%, bevorzugt 75 bis 85 Gew.-%, an Styrol und/oder $\alpha$-Methylstyrol, insbesondere Styrol, und 10 bis 30 Gew.-%, bevorzugt 15 bis 25 Gew.-%, Acrylnitril, Methacrylnitril und/oder Methylmethacrylat, insbesondere Acrylnitril, in Gegenwart der agglomerierten Pfropfgrundlage (B1). Die Summe aus B21 und B22 ergibt 100 Gew.-%.

Bevorzugte Pfropfhüllen B2 sind aufgebaut aus: B2-1 Copolymeren von Styrol und Acrylnitril, B2-2 Copolymeren von $\alpha$-Methylstyrol und Acrylnitril. Besonders bevorzugt sind B2-1 Copolymere aus Styrol und Acrylnitril.

Besonders bevorzugte Pfropfhüllen B2 werden erhalten durch Umsetzung von 75 bis 85 Gew.-% Styrol und von 15 bis 25 Gew.-% Acrylnitril.

Die Pfropfhülle (B2) wird nach Durchführung der vorstehend beschriebenen Agglomeration der Pfropfgrundlage (B1) vorzugsweise durch ein Emulsionspolymerisationsverfahren erzeugt.

Die Pfropfcopolymerisation zur Erzeugung der Pfropfhülle (B2) kann im gleichen System erfolgen wie die Emulsionspolymerisation zur Herstellung der Pfropfgrundlage (B1), wobei, falls nötig, weitere Emulgatoren sowie Hilfsstoffe zugegeben werden können. Das gemäß einer Ausführungsform der Erfindung aufzupfropfende Monomergemisch kann dem Reaktionsgemisch auf einmal, verteilt auf mehreren Stufen - beispielsweise zum Aufbau mehrerer Pfropfauflagen - oder kontinuierlich während der Polymerisation zugegeben werden. Vorzugsweise können die Monomere B21 und B22 (insbesondere Styrol und Acrylnitril) gleichzeitig zugegeben werden.

Die Pfropfhülle (B2) wird gemäß einer Ausführungsform der Erfindung in Gegenwart der nach dem oben beschriebenen Verfahren erhaltenen agglomerierten Pfropfgrundlage (B1) aus einem Monomergemisch bestehend aus den Komponenten B21 und B22, insbesondere Styrol und Acrylnitril, polymerisiert. Dabei können die Monomere einzeln oder in Mischungen miteinander zugefügt werden. Beispielsweise kann man zunächst B21 allein und danach eine Mischung aus B21 und B22 aufpfropfen. Es ist vorteilhaft, diese Pfropfcopolymerisation wieder in wässriger Emulsion unter den üblichen, vorstehend für die Pfropfgrundlage beschriebenen, Bedingungen durchzuführen.

Einzelheiten zur Durchführung der Pfropfreaktion sind dem Fachmann bekannt und werden zum Beispiel in DE-A 24 27 960 und EP-A 0 062 901 offenbart.

Bevorzugt sind Pfropfcopolymere B, aufgebaut aus:

B1: 40 bis 85 Gew.-%, bezogen auf den Feststoffgehalt des Pfropfcopolymers B, einer Pfropfgrundlage (B1), erhältlich durch (a) Polymerisation von:

(B11): 10,5 bis 24,5 Gew.-%, bezogen auf die Pfropfgrundlage B1, Styrol, und
(B12): 75,5 bis 89,5 Gew.-%, bezogen auf die Pfropfgrundlage B1, Butadien,

wobei (B11) und (B12) 100 Gew.-% ergeben;

und (b) Agglomeration der erhaltenen Pfropfgrundlage B1 durch Zugabe von

(C): 0,01 bis 5 Gew.-Teilen, bezogen auf 100 Gew.-Teile der Pfropfgrundlage B1, jeweils bezogen auf den Feststoffgehalt, eines agglomerierend wirkenden Copolymers (C) aus:

(C1): 80 bis 99,9 Gew.-% Ethylacrylat und
(C2): 0,1 bis 20 Gew.-% Methylacrylamid,

wobei (C1) und (C2) 100 Gew.-% ergeben; und

B2: 15 bis 60 Gew.-%, bezogen auf den Feststoffgehalt des Pfropfcopolymers B, einer Pfropfhülle erhältlich durch Umsetzung der agglomerierten Pfropfgrundlage B1 mit einer Mischung von:

(B21) 70 bis 90 Gew.-%, bezogen auf die Pfropfhülle B2, Styrol, und

(B22) 10 bis 30 Gew.-%, bezogen auf die Pfropfhülle B2, Acrylnitril,

wobei die Gesamtsumme aus Pfropfgrundlage B1 und Pfropfhülle B2 100 Gew.-% ergibt;

dadurch gekennzeichnet, dass

(iii) das agglomerierend wirkende Copolymer (C) eine Polydispersität U von kleiner 0,27 und einen $d_{50}$-Wert von 100 bis 150 nm aufweist, und

(iv) die agglomerierte Pfropfgrundlage B1 eine bimodale Teilchengrößenverteilung von einer Fraktion x) nicht agglomerierter Teilchen mit einem $d_{50}$-Wert im Bereich von 80 bis 120 nm und einer Fraktion y) agglomerierter Teilchen mit einem $d_{50}$-Wert im Bereich von 350 bis 450 nm und einer Polydispersität U von 0,27 bis 0,20 aufweist.

Die erfindungsgemäßen Pfropfcopolymere B können so weiter verwendet werden, wie sie in der Reaktionsmischung anfallen, beispielsweise als Latexemulsion oder Latexdispersion. Alternativ können sie aber auch in einem weiteren Schritt aufgearbeitet werden. Maßnahmen zur Aufarbeitung sind dem Fachmann im Prinzip bekannt. Zu den Aufarbeitungsschritten zählt zum Beispiel die Isolierung der Pfropfcopolymerisate B aus der Reaktionsmischung, zum Beispiel durch Sprühtrocknung, Scherung oder durch Fällen mit starken Säuren oder mittels anderer Fällungsmittel, z.B. aus anorganischen Verbindungen wie Magnesiumsulfat. Zu den Aufarbeitungsschritten zählt auch das Trocknen des isolierten Kautschuks. Der Feststoffgehalt der Dispersion des Pfropfkautschuks beträgt ca. 40 Gew.-%.

Weiterer Gegenstand der Erfindung ist ein Verfahren zur Herstellung der erfindungsgemäßen Pfropfcopolymere B durch:

(i) Polymerisieren der Monomeren B12 und B11 in wässriger Emulsion zu einer teilchenförmigen Pfropfgrundlage B1,

(ii) Agglomeration der in einer Emulsion vorliegenden teilchenförmigen Pfropfgrundlage B1 mittels eines agglomerierend wirkenden Copolymers (C), wobei das Copolymer (C) eine Polydispersität U von kleiner 0,27 und einen $d_{50}$-Wert von 100 bis 150 nm aufweist, zu einer agglomerierten teilchenförmigen Pfropfgrundlage B1, und nachfolgend

(iii) Polymerisieren der Monomeren B21 und B22 der Pfropfhülle in wässriger Emulsion in Gegenwart der agglomerierten teilchenförmigen Pfropfgrundlage B1.

B, B12, B11, B1, C, B21 und B22 haben die für das erfindungsgemäße Pfropfcopolymer angegebene Bedeutung.

Nach dem erfindungsgemäßen Verfahren weist die erhaltene teilchenförmige Pfropfgrundlage B1 im Allgemeinen einen $d_{50}$-Wert von 80 bis 120 nm auf.

Gemäß einer bevorzugten Ausführungsform des erfindungsgemäßen Verfahrens wird Schritt (i) ausgeführt wie nachfolgend beschrieben:

(i) Polymerisieren der Monomeren B12 und B11 in wässriger Emulsion zu einer teilchenförmigen Pfropfgrundlage B1, die einen $d_{50}$-Wert von 80 bis 120 nm aufweist, wobei

(i-I) zunächst nur Monomer (B11) in einer Menge von 3 bis 10 Gew.-%, in Bezug auf die Gesamtmonomermenge (B11) und (B12), polymerisiert wird, und danach

(i-II) eine Mischung aus Monomer (B12) und dem restlichen Monomer (B11) polymerisiert wird.

Gemäß einer weiteren bevorzugten Ausführungsform des erfindungsgemäßen Verfahrens ist Schritt (i) wie zuvor beschrieben, wobei Schritt (i-II) gekennzeichnet ist durch:

(i-IIa) Polymerisation einer ersten Mischung aus Monomeren (B12) und (B11) von 4 bis 10 Gew.-%, in Bezug auf die Gesamtmonomermenge (B11) und (B12),

(i-IIb) und nachfolgender Polymerisation einer weiteren Mischung aus restlichen Monomeren (B12) und (B11) von 80 bis 93 Gew.-%, in Bezug auf die Gesamtmonomermenge (B11) und (B12),

wobei die Summe der Monomeren (B11) und (B12) in (i-I), (i-IIa) und (i-IIb) 100 Gew.-% ergibt.

Gemäß einer weiteren bevorzugten Ausführungsform des erfindungsgemäßen Verfahrens ist Schritt (i) wie zuvor beschrieben, wobei Schritt (i-II) gekennzeichnet ist durch:

(i-IIa) Polymerisation einer ersten Mischung aus Monomeren (B12) und (B11) von 4 bis 10 Gew.-%, in Bezug auf die Gesamtmonomermenge (B11) und (B12),

(i-IIb) und nachfolgender Polymerisation einer weiteren Mischung aus restlichen Monomeren (B12) und (B11) von 80 bis 93 Gew.-%, in Bezug auf die Gesamtmonomermenge (B11) und (B12),

wobei die Summe der Monomeren (B11) und (B12) in (i-I), (i-IIa) und (i-IIb) 100 Gew.-% ergibt,
und dadurch, dass das Verhältnis der Monomeren (B12) und (B11) in den Teilschritten (i-IIa) und (i-IIb) unterschiedlich ist.

Gemäß einer weiteren bevorzugten Ausführungsform des erfindungsgemäßen Verfahrens ist Schritt (i) wie zuvor beschrieben, wobei Schritt (i-II) gekennzeichnet ist durch:

(i-IIa) Polymerisation einer ersten Mischung aus Monomeren (B12) und (B11) von 4 bis 10 Gew.-%, in Bezug auf die Gesamtmonomermenge (B11) und (B12),
(i-IIb) und nachfolgender Polymerisation einer weiteren Mischung aus restlichen Monomeren (B12) und (B11) von 80 bis 93 Gew.-%, in Bezug auf die Gesamtmonomermenge (B11) und (B12),

wobei die Summe der Monomeren (B11) und (B12) in (i-I), (i-IIa) und (i-IIb) 100 Gew.-% ergibt,
und dadurch, dass das Verhältnis der Monomeren (B12) und (B11) in den Teilschritten (i-IIa) und (i-IIb) konstant ist.

Weiterer Gegenstand der Erfindung ist eine thermoplastische Formmasse enthaltend das erfindungsgemäße Pfropfcopolymer B und ein thermoplastisches Copolymer A, sowie gegebenenfalls weitere Komponenten K.

Gegenstand der Erfindung ist eine thermoplastische Formmasse, enthaltend ein thermoplastisches Copolymer A und ein Pfropfcopolymer B sowie gegebenenfalls weitere Komponenten K, wobei die Formmasse enthält:

A: 40 bis 80 Gew.-% mindestens eines thermoplastischen Copolymers A erhältlich aus:

A1: 20 bis 31 Gew.-%, bezogen auf das Copolymer A, Acrylnitril, und
A2: 69 bis 80 Gew.-%, bezogen auf das Copolymer A, Styrol oder $\alpha$-Methylstyrol oder einer Mischung aus Styrol und $\alpha$-Methylstyrol,

B: 20 bis 60 Gew.-% des erfindungsgemäßen Pfropfcopolymers B; und
K: 0 bis 5 Gew.-% weitere Komponenten K,

wobei die Summe aus A, B und K 100 Gew.-% ergibt.

Copolymer A

Das Copolymer A wird vorzugsweise aus den Komponenten Acrylnitril und Styrol und/oder $\alpha$-Methylstyrol durch Massepolymerisation oder in Gegenwart eines oder mehrerer Lösungsmittel hergestellt. Bevorzugt sind dabei Copolymere A mit Molmassen $M_w$ von 50.000 bis 300.000 g/mol, wobei die Molmassen z.B. durch Lichtstreuung in Tetrahydrofuran bestimmt werden können (GPC mit UV-Detektion). Das Copolymer A bildet die Matrix der thermoplastischen Formmasse.

Das Copolymer A kann insbesondere enthalten oder bestehen aus:

(Aa) Polystyrol-Acrylnitril, hergestellt aus, bezogen auf (Aa), 69 bis 80 Gew.-% Styrol und 20 bis 31 Gew.-% Acrylnitril, oder
(Ab) Poly-$\alpha$-Methylstyrol-Acrylnitril, hergestellt aus, bezogen auf (Ab), 69 bis 80 Gew.-% $\alpha$-Methylstyrol und 20 bis 31 Gew.-% Acrylnitril, oder
(Ac) eine Mischung der Copolymer-Matrix (Aa) und der Copolymer-Matrix (Ab).

Das Copolymer A kann auch durch Copolymerisation von Acrylnitril, Styrol und $\alpha$-Methylstyrol gewonnen werden. Im Prinzip sind jedoch auch Polymer-Matrices verwendbar, die weitere Monomerbausteine enthalten.

Das zahlengemittelte Molekulargewicht ($M_n$) der Copolymer-Matrix A beträgt vorzugsweise von 15.000 bis 100.000 g/mol (bestimmt mittels GPC mit UV-Detektion).

Die Viskosität (Vz) der copolymeren Matrix A beträgt (gemessen nach DIN 53726 bei 25°C in einer 0,5 gew.-%igen Lösung in DMF) z.B. von 50 bis 120 ml/g. Durch Massepolymerisation bzw. Lösungspolymerisation in z.B. Toluol oder Ethylbenzol kann die Copolymer-Matrix A hergestellt werden nach einem Verfahren, wie es beispielsweise im Kunststoff-Handbuch, Vieweg-Daumiller, Band V, (Polystyrol), Carl-Hanser-Verlag, München 1969, Seiten 122 f., Zeilen 12 ff. beschrieben wird.

Wie bereits oben beschrieben ist die bevorzugte Copolymer-Matrix Komponente A ein Polystyrol-Acrylnitril, Poly-$\alpha$-Methylstyrol-Acrylnitril oder deren Mischungen. In einer bevorzugten Ausführungsform der Erfindung wird die Komponente A nach der Herstellung nach dem Fachmann bekannten Verfahren isoliert und vorzugsweise zu einem Granulat verarbeitet.

Ein weiterer Gegenstand der Erfindung ist eine thermoplastische Formmasse, die zusätzlich mindestens ein weiteres thermoplastisches Polymer (TP), ausgewählt aus der Gruppe der Polycarbonate, Polyestercarbonate, Polyester und Polyamide enthält.

Die in der Formmasse erfindungsgemäß eingesetzten Copolymere A können auch z.B. mit weiteren thermoplastischen Polymeren (TP) gemischt werden. Dabei kommen insbesondere teilkristalline Polyamide, teilaromatische Copolyamide, Polyester, Polyoxyalkylen, Polyarylensulfide, Polyetherketone, Polyvinylchloride und/oder Polycarbonate in Frage.

Die geeigneten Polycarbonate bzw. Polyestercarbonate können linear oder verzweigt sein. Verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten. Die Polycarbonate bzw. Polyestercarbonate können aromatisch gebundenes Halogen, vorzugsweise Brom und/oder Chlor enthalten. Vorzugsweise sind sie jedoch halogenfrei. Sie haben mittlere Molekulargewichte ($M_w$, Gewichtsmittel; bestimmt z.B. durch Ultrazentrifugation oder Streulichtmessung) von 10000 bis 200000, vorzugsweise von 20000 bis 80000.

Geeignete thermoplastische Polyester sind vorzugsweise Polyalkylenterephthalate, d.h. Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte. Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (siehe Kunststoff-Handbuch, Band VIII. S. 695 ff, Carl Hanser Verlag, München 1973). In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste. Die Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten (siehe z.B. DE 2 407 647, DE 2 407 776 sowie DE 2715 932). Die Polyalkylenterephthalate können durch Einbau relativ kleiner Mengen 3- oder 4-wertiger Alkohole oder 3- oder 4-basiger Carbonsäuren, wie sie in DE 1 900 270 und der US 3,692,744 beschrieben sind, verzweigt werden.

Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden. Bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate. Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykol-butandiol-1,4)-terephthalate.

Geeignete Polyamide sind bekannte Homopolyamide, Copolyamide und Mischungen dieser Polyamide. Es können teilkristalline und/oder amorphe Polyamide sein. Als teilkristalline Polyamide sind Polyamid-6, Polyamid-6,6, Mischungen und entsprechende Copolymerisate aus diesen Komponenten geeignet.

Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,2.4-Trimethylhexamethylendiamin und/oder Isophorondiamin besteht und deren Zusammensetzung bekannt ist. Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Als amorphe Polyamide können bekannte Produkte eingesetzt werden, die erhalten werden durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylendiamin, Bis-(4-aminocyclohexyl)-methan, Bis-(4-aminocyclohexyl)-propan, 3,3'-Di-methyl-4,4'-diaminodicyclohexylmethan, 3-Aminomethyl,3,5,5-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomere erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden. Besonders geeignete amorphe Polyamide sind Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Tri-methylhexamethylendiamin, 2,5- und/oder 2,6-Bis-(aminomethyl)-norbornen; oder aus Isophthalsäure, 4.4'-Diaminodicyclohexylmethan und ε-Caprolactam; oder aus Isophthalsäure, 3,3'-Dimethyl-4,4'-diaminodicyclohexylmethan und Laurinlactam; oder aus Terephthalsäure und dem Isomerengemisch aus 2,2,4- und/oder 2,4,4-Trimethylhexamethylendiamin.

Es können auch Mischungen aus zwei oder mehreren der genannten Polymere (TP) eingesetzt werden. Die erfindungsgemäßen thermoplastischen Formmassen können, bezogen auf die Menge Copolymer A plus Pfropfcopolymer B, 0 bis 90 Gew.-%, bevorzugt 0 bis 50 Gew.-%, insbesondere bevorzugt 0 bis 20 Gew.-% der oben genannten Polymere (TP) enthalten.

Bevorzugt ist eine erfindungsgemäße thermoplastische Formmasse bestehend aus Copolymer A und Pfropfcopolymer B sowie gegebenenfalls weiteren Komponenten K.

Als weitere Komponenten (K) kann die thermoplastische Formmasse eine oder mehrere Komponenten ausgewählt aus der Gruppe bestehend aus Dispergiermitteln (DM), Füllstoffen (F) und Zusatzstoffen (D) enthalten.

Als Komponente K können die erfindungsgemäßen thermoplastischen Formmassen ferner auch 0 bis 5 Gew.-% an faser- oder teilchenförmigen Füllstoffen (F) oder deren Mischungen enthalten, jeweils bezogen auf die Menge der Komponenten A plus B plus K. Beispielsweise können als Füll- oder Verstärkungsstoffe Glasfasern, die mit einer Schlichte und einem Haftvermittler ausgerüstet sein können, Glaskugeln, Mineralfasern, Aluminiumoxidfasern, Glimmer, Quarzmehl oder Wollastonit zugesetzt werden. Außerdem können Metallflocken, Metallpulver, Metallfasern, metallbeschichtete Füllstoffe, z.B. nickelbeschichtete Glasfasern sowie andere Zuschlagstoffe, die elektromagnetische Wellen abschirmen, den erfindungsgemäßen Formmassen beigemischt werden. Zusätzlich können Kohlenstofffasern, Ruß, insbesondere Leitfähigkeitsruß oder nickelbeschichtete C-Fasern zugesetzt werden.

Den erfindungsgemäßen Formmassen können als Hilfs- und Verarbeitungszusatzstoffe verschiedene Additive (D) in Mengen von 0 bis 5 Gew.-% zugesetzt werden. Als Zusatzstoffe (D) kommen alle solche Substanzen in Betracht, die üblicherweise zur Verarbeitung oder Ausrüstung der Polymere zum Einsatz kommen.

Genannt seien beispielsweise Farbstoffe, Pigmente, Färbemittel, Antistatika, Antioxidantien, Stabilisatoren zur Verbesserung der Thermostabilität, Stabilisatoren zur Erhöhung der Lichtstabilität, Stabilisatoren zum Anheben der Hydrolysebeständigkeit und der Chemikalienbeständigkeit, Mittel gegen die Wärmezersetzung und insbesondere Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Hinsichtlich weiterer üblicher Hilfs- und Zusatzstoffe wird z.B. auf "Plastics Additives Handbook", Ed. Gächter and Müller, 4th edition, Hanser Publ., Munich, 1996, verwiesen.

Geeignete Pigmente sind beispielsweise Titandioxid, Phthalocyanine, Ultramarinblau, Eisenoxide oder Ruß, sowie die gesamte Klasse der organischen Pigmente.

Geeignete Färbemittel sind z.B. alle Farbstoffe, die zur transparenten, halbtransparenten oder nichttransparenten Einfärbung von Polymeren verwendet werden können, insbesondere solche, die zur Einfärbung von Styrolcopolymeren geeignet sind.

Als geeignete Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien sind z.B. sterisch gehinderte einkernige oder mehrkernige phenolische Antioxidantien, die auf verschiedene Weise substituiert und auch über Substituenten verbrückt sein können. Hierzu zählen neben monomeren auch oligomere Verbindungen, die aus mehreren phenolischen Grundkörpern aufgebaut sein können. Ferner kommen Hydrochinone und Hydrochinon-analoge, substituierte Verbindungen in Betracht, ebenso Antioxidantien auf Basis von Tocopherolen und deren Derivaten. Auch Mischungen verschiedener Antioxidantien können verwendet werden. Prinzipiell können alle handelsüblichen oder für Styrolcopolymere geeigneten Verbindungen eingesetzt werden, z.B. Antioxidantien aus der Irganox-Reihe. Zusammen mit den zuvor beispielhaft genannten phenolischen Antioxidantien können sogenannte Co-Stabilisatoren mitverwendet werden, insbesondere Phosphor- oder Schwefelhaltige Co-Stabilisatoren. Solche P- oder S-haltigen Co-Stabilisatoren sind dem Fachmann bekannt.

Geeignete Stabilisatoren gegen Lichteinwirkung sind z.B. verschiedene substituierte Resorcine, Salicylate, Benzotriazole und Benzophenone. Als Mattierungsmittel kommen sowohl anorganische Stoffe wie Talkum, Glaskugeln oder Metallcarbonate (wie z.B. $MgCO_3$, $CaCO_3$) in Betracht, als auch Polymerpartikel - insbesondere sphärische Partikel mit Durchmessern $d_{50}$ über 1 mm - auf Basis von z.B. Methylmethacrylat, Styrolverbindungen, Acrylnitril oder deren Mischungen. Ferner kann man auch Polymere verwenden, die saure und/oder basische Monomere einpolymerisiert enthalten.

Geeignete Anti-Tropfmittel sind beispielsweise Polytetrafluorethylen (Teflon)-Polymere und ultrahochmolekulares Polystyrol (Molmasse $M_W$ über 2000000).

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein.

Die Einarbeitung der Glasfasern kann sowohl in Form von Kurzglasfasern als auch in Form von Endlossträngen (Rovings) erfolgen.

Als teilchenförmige Füllstoffe eignen sich z.B. Ruß, amorphe Kieselsäure, Magnesiumcarbonat, gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-Bis(hydroxyalkyl)alkylamine oder -alkylenamine, Polyethylenglycolester, Copolymere aus Ethylenoxidglycol und Propylenoxidglycol (insbesondere Zweiblock- oder Dreiblockcopolymere aus Ethylenoxid- und Propylenoxid-Blöcken) und Glycerinmono- und -distearate, sowie deren Mischungen.

Geeignete Stabilisatoren sind beispielsweise gehinderte Phenole, aber auch Vitamin E bzw. analog dazu aufgebaute Verbindungen, wie auch butylierte Kondensationsprodukte von p-Kresol und Dicyclopentadien. Auch HALS-Stabilisatoren (Hindered Amine Light Stabilizers), Benzophenone, Resorcine, Salicylate, Benzotriazole sind geeignet. Andere geeignete Verbindungen sind zum Beispiel Thiocarbonsäureester. Einsetzbar sind auch $C_6$-$C_{20}$-Alkylester der Thiopropionsäure, besonders die Stearylester und Laurylester. Man kann auch Thiodipropionsäuredilaurylester (Dilaurylthiodipropionat), Thiodipropionsäuredisterarylester (Distearylthiodipropionat) oder deren Mischungen verwenden. Weitere Additive sind beispielsweise HALS-Absorber, wie Bis(2,2,6,6-tetramethyl-4-piperidyl)sebazat oder UV-Absorber wie 2H-Benzotriazol-2-yl-(4-methylphenol). Derartige Additive werden üblicherweise in Mengen von 0,01 bis zu 2 Gew.-% (bezogen auf das Gesamtgemisch) verwendet.

Geeignete Gleit- und Entformungsmittel sind Stearinsäuren, Stearylalkohol, Stearinsäureester, Amidwachse (Bisstearylamid),Polyolefinwachse bzw. allgemein höhere Fettsäuren, deren Derivate und entsprechende Fettsäuregemische mit 12 bis 30 Kohlenstoffatomen. Auch Ethylen-bis-stearamid (z. B. Irgawax, Hersteller Ciba, Schweiz) ist besonders geeignet.

Die Mengen dieser Zusätze liegen im Bereich von 0,05 bis 5 Gew.-%.

Auch Silikonöle, oligomeres Isobutylen oder ähnliche Stoffe kommen als Zusatzstoffe in Betracht. Die üblichen Mengen, falls verwendet, betragen von 0,001 bis 3 Gew.-% bezogen auf die Menge der Komponenten A plus B plus K. Auch Pigmente, Farbstoffe, Farbaufheller, wie Ultramarinblau, Phthalocyanine, Titandioxid, Cadmiumsulfide, Derivate der Perylentetracarbonsäure sind verwendbar. Verarbeitungshilfsmittel und Stabilisatoren wie UV-Stabilisatoren, Wärmestabilisatoren (z.B. butylierte Reaktionsprodukte von p-Cresol und Dicyclopentadien; Wingstay L; Hersteller: Omnova; oder aber Thiodipropionsäuredilaurylester, Irganox PS 800, Hersteller: BASF), Schmiermittel und Antistatika (z.B. Ethylenoxid-Propylenoxid-Copolymere wie Pluronic (Hersteller: BASF) werden, falls eingesetzt, üblicherweise in Mengen von 0,01 bis 5 Gew.-% verwendet, bezogen auf die gesamte Formmasse.

Die einzelnen Zusatzstoffe werden in der Regel in den jeweils üblichen Mengen verwendet.

Die Herstellung der erfindungsgemäßen Formmassen aus den Komponenten A und B (und gegebenenfalls weiteren Polymeren (TP), und Komponenten K wie Füllstoffen (F) sowie üblichen Zusatzstoffen (D)) kann nach allen bekannten Methoden erfolgen. Vorzugsweise erfolgt jedoch das Abmischen der Komponenten durch Schmelzevermischung, beispielsweise gemeinsames Extrudieren, Kneten oder Verwalzen der Komponenten. Dies wird bei Temperaturen im Bereich von 160 bis 400°C, bevorzugt von 180 bis 280°C durchgeführt. In einer bevorzugten Ausführungsform wird die Komponente (B) zuvor aus der bei den jeweiligen Herstellungsschritten erhaltenen wässrigen Dispersion teilweise oder vollständig isoliert. Beispielsweise können die Pfropfcopolymere B als feuchte oder trockene Krümel/Pulver (beispielsweise mit einer Restfeuchte von 1 bis 40 %, insbesondere 20 bis 40 %) mit den Matrix-Polymeren vermischt werden, wobei dann während des Vermischens die vollständige Trocknung der Pfropfcopolymere erfolgt. Die Trocknung der Partikel kann auch gemäß DE-A 19907136 erfolgen.

Ein weiterer Gegenstand der Erfindung ist die Verwendung der beschriebenen Formmassen zur Herstellung von Formteilen wie Platten oder Halbzeugen, Folien, Fasern oder auch von Schäumen sowie die entsprechenden Formteile wie Platten, Halbzeuge, Folien, Fasern oder Schäume.

Die Verarbeitung kann mittels der bekannten Verfahren der Thermoplastverarbeitung durchgeführt werden, insbesondere kann die Herstellung durch Thermoformen, Extrudieren, Spritzgießen, Kalandrieren, Hohlkörperblasen, Pressen, Presssintern, Tiefziehen oder Sintern, vorzugsweise durch Spritzgießen erfolgen.

Die erfindungsgemäßen Formmassen weisen hervorragende mechanische Eigenschaften wie Zähigkeit und Steifigkeit auf.

Des Weiteren wurde für die erfindungsgemäßen Formmassen ein verbesserter Oberflächenglanz gefunden.

Die Erfindung wird durch die nachfolgenden Beispiele und die Patentansprüche näher erläutert:

Zunächst werden die zur Charakterisierung der Polymere eingesetzten Untersuchungsmethoden kurz zusammengefasst:

a) Charpy-Kerbschlagzähigkeit [kJ/m$^2$]:

Die Kerbschlagzähigkeit wird ermittelt an Probekörpern (80 x 10 x 4 mm, hergestellt durch Spritzguss bei einer Massetemperatur von 240°C und einer Werkzeugtemperatur von 70°C), bei 23°C nach ISO 179-1A

b) Fließfähigkeit (MVR [ml/10 min]):

Die Fließfähigkeit wird ermittelt an einer Polymerschmelze bei 220°C und 10 kg Belastung nach ISO 1133.

c) Teilchengröße [nm]:

Zur Messung der gewichtsmittleren Teilchengröße $d_w$ der Kautschukdispersionen der Pfropfgrundlage B1 und der agglomerierten Pfropfgrundlage B1 wurde eine Scheibenzentrifuge DC 24000 von CPS Instruments Inc. verwendet. Die Messung erfolgte in 17,1 ml einer wässrigen Zuckerlösung mit einem Saccharose-Dichtegradienten von 8 bis 20 Gew.-%, um ein stabiles Flotationsverhalten der Partikel zu erreichen. Ein Polybutadienlatex mit einer engen Verteilung und einer mittleren Teilchengröße von 405 nm wurde für die Kalibrierung verwendet. Die Messungen wurden bei einer Drehzahl der Scheibe von 24000 UpM durch Einspritzen von 0,1 ml einer verdünnten Kautschukdispersion (wässrige 24 Gew.-% Saccharose-Lösung, enthaltend ca. 0,2 - 2 Gew.-% Kautschukteilchen) in die Scheibenzentrifuge, enthaltend die wässrige Zuckerlösung mit einem Saccharose Dichtegradienten von 8 bis 20 Gew.-%, durchgeführt.

Zur Messung der gewichtsmittleren Teilchengröße $d_w$ des agglomerierend wirkenden Copolymers (C) mit der Scheibenzentrifuge DC 24000 von CPS Instruments Inc. wurden 17,1 ml einer wässrigen Zuckerlösung mit einem Saccharose-Dichtegradienten von 3,5 bis 15,5 Gew.-% verwendet, um ein stabiles Sedimentationsverhalten der Teilchen zu erreichen. Ein Polyurethan-Latex (Teilchendichte 1,098 g / ml) mit einer engen Verteilung und einer mittleren Teilchengröße von 155 nm wurde für die Kalibrierung verwendet. Die Messungen wurden bei einer Drehzahl der Scheibe von 24000 UpM durchgeführt durch Einspritzen von 0,1 ml einer verdünnten Dispersion des Copolymers C (hergestellt durch Verdünnen mit Wasser bis zu einem Gehalt von 1 - 2 Gew.%) in die Scheibenzentrifuge, enthaltend die wässrige Zuckerlösung mit einem Saccharose Dichtegradienten von 3,5 bis 15,5 Gew.%, durchgeführt.

Die Berechnung gewichtsmittleren Teilchengröße $d_W$ und der gewichtsmittleren Teilchendurchmesser $d_{50}$ sowie $d_{10}$ und $d_{90}$ erfolgte mittels der Formel:

$$d_w = \text{Summe} \left( n_i * d_i^4 \right) / \text{Summe} \left( n_i * d_i^3 \right)$$

$n_i$: Anzahl der Partikel mit dem Durchmesser $d_i$)

Die Feststoffgehalte wurden nach Trocknung der Proben bei 180 °C für 25 min in einem Trockenschrank gemessen.

d) Quellungsindex QI und Gelgehalt [%]

Die Werte für den Gelgehalt wurden mit dem Drahtkäfigverfahren in Toluol (siehe Houben-Weyl, Methoden der Organischen Chemie, Makromolekulare Stoffe, Teil 1, Seite 307 (1961) Thieme Verlag Stuttgart) ermittelt.

Aus der wässrigen Dispersion der Pfropfgrundlage wurde durch Verdampfen des Wassers ein Film hergestellt. 0,2 g dieses Films wurden mit 50 g Toluol versetzt. Nach 24 Stunden wurde das Toluol von der aufgequollenen Probe abgetrennt und die Probe ausgewogen. Nach 16 Stunden Trocknen der Probe im Vakuum bei 110 °C wurde erneut ausgewogen.

Der Quellungsindex wird bestimmt durch:

$$\text{Quellungsindex QI} = \frac{\text{Gequollenes Gel mit Toluol vor dem Trocknen}}{\text{Gel nach dem Trocknen}}$$

Der Gelgehalt wird bestimmt durch:

$$\text{Gelgehalt} = \frac{\text{Masse der im Vakuum getrockneten Probe}}{\text{Einwaage der Probe vor der Quellung}} \times 100\%$$

e) Glanzverhalten

Zur Bestimmung des Glanzverhaltens werden mittels einer Spritzgussmaschine bei einer Massetemperatur von 240°C und einer Werkzeugtemperatur von 70°C rechteckige Plättchen mit den Abmessungen 60 mm x 40 mm x 2 mm aus der Polymerschmelze hergestellt. Der Oberflächenglanz wird durch Reflektionsmessung nach DIN 67530 bei einem Winkel von 20° gemessen.

f) Yellowness Index YI

Die Bestimmung des YI-Wertes erfolgte an Plättchen mit den Abmessungen 60 x 40 x 2 mm, hergestellt durch Spritzguss bei einer Massetemperatur von 240°C und einer Werkzeugtemperatur von 70°C nach ASTM-Methode E313-96 (Lichtart / Beobachter-Kombination C / 2°).

Beispiele

Pfropfgrundlage B1

Die Herstellung der Pfropfgrundlage B1-1 erfolgt durch Emulsionspolymerisation nach dem Zulaufverfahren. Als Comonomer werden 7 Gew.-% Styrol verwendet.

Die Emulsionspolymerisation wird in einem 150 L- Reaktor bei einer Temperatur von 67 °C durchgeführt. 43120 g der Monomermischung (Butadien und Styrol) werden bei 67 °C in Anwesenheit von 431,2 g tert.-Dodecylmercaptan (TDM), 311 g Kaliumstearat, 82 g Kaliumpersulfat, 147 g Natriumhydrogencarbonat und 58400 g Wasser polymerisiert, wobei ein Latex der Pfropfgrundlage mit einem Feststoffgehalt von 42,1 Gew.-% erhalten wird.

Die Monomere werden in der im Folgenden aufgeführten Reihenfolge in den Reaktor gegeben: Zunächst erfolgt die Zugabe von Styrol in einer Menge von 7 Gew.-%, bezogen auf die gesamte Monomermenge, innerhalb von 20 Minuten. Im Anschluss an die Styrolzugabe erfolgt die Zugabe eines ersten Teils des Butadiens in einer Menge von 7 Gew.-%, bezogen auf die gesamte Monomermenge, innerhalb von 25 Minuten.

Der restliche Teil des Butadiens, der 86 Gew.-%, bezogen auf die gesamte Monomermenge, entspricht, wird anschließend innerhalb von 8,5 Stunden zugegeben. TDM wird zu Beginn der Reaktion auf einmal zugegeben. Der Umsatz beträgt $\geq$ 95 %.

Die Herstellung der Pfropfgrundlage B1-2 erfolgt wie zuvor für B1-1 beschrieben, aber mit folgenden Änderungen: Der erste Teil von 7 Gew.-% Butadien (bezogen auf die gesamte Monomermenge) wird durch eine Mischung aus 0,527 Gew.-% Styrol und 6,473 Gew.-% Butadien ersetzt, und der restliche Teil an Butadien von 86 Gew.-% (bezogen auf die gesamte Monomermenge), wird durch eine Mischung aus 6,473 Gew.-% Styrol und 79,527 Gew.-% Butadien ersetzt.

Die Herstellung der Pfropfgrundlage B1-3 erfolgt wie zuvor für B1-1 beschrieben, aber mit folgenden Änderungen: Der erste Teil von 7 Gew.-% Butadien (bezogen auf die gesamte Monomermenge) wird durch eine Mischung aus 1,054 Gew.-% Styrol und 5,946 Gew.-% Butadien ersetzt, und der restliche Teil an Butadien von 86 Gew.-% (bezogen auf die gesamte Monomermenge), wird durch eine Mischung aus 12,946 Gew.-% Styrol und 73,054 Gew.-% Butadien ersetzt.

Die Herstellung der Pfropfgrundlage B1-4 erfolgt wie zuvor für B1-1 beschrieben, aber mit folgenden Änderungen: Der erste Teil von 7 Gew.-% Butadien (bezogen auf die gesamte Monomermenge) wird durch eine Mischung aus 1,581 Gew.-% Styrol und 5,419 Gew.-% Butadien ersetzt, und der restliche Teil an Butadien von 86 Gew.-% (bezogen auf die gesamte Monomermenge), wird durch eine Mischung aus 19,419 Gew.-% Styrol und 66,581 Gew.-% Butadien ersetzt.

Weitere Daten der Pfropfgrundlage B1-1 bis B1-4 sind Tabelle 1 zu entnehmen. Der Gesamtstyrolgehalt ist die gesamte Styrolmenge, bezogen auf die gesamte Monomermenge; der Kernstyrolgehalt bezieht sich auf das zuerst polymerisierte Styrol, er beträgt in allen Versuchen 7 Gew.-%, bezogen auf die gesamte Monomermenge.

Tabelle 1

| Pfropfgrundlage | | B1-1 | B1-2 | B1-3 | B1-4 |
|---|---|---|---|---|---|
| Gesamtstyrolgehalt | Gew.-% | 7 | 14 | 21 | 28 |
| Kernstyrolgehalt | Gew.-% | 7 | 7 | 7 | 7 |
| Gelgehalt | Gew.-% | 78,9 | 72,2 | 75,9 | 76,7 |
| QI | | 22 | 29 | 20 | 26 |
| $d_w$ | nm | 88,4 | 104,0 | 87,9 | 82,2 |
| $d_{10}$ | nm | 72,3 | 90,5 | 72,6 | 69,9 |
| $d_{50}$ | nm | 90,0 | 105,8 | 88,1 | 84,3 |
| $d_{90}$ | nm | 101,1 | 114,8 | 98,8 | 93,4 |
| U | | 0,32 | 0,23 | 0,30 | 0,28 |

Agglomerierend wirkendes Copolymer C-1 (erfindungsgemäß)

Die Herstellung des Copolymers C-1 erfolgt mittels Emulsionspolymerisation.
In 1177,2 g entmineralisiertem Wasser werden zuerst 6,29 g Mersolat H95 (Lanxess Deutschland GmbH, Emulgator, $C_{12}$-$C_{18}$-$SO_3^-$ $K^+$) gelöst und in einer Stickstoffatmosphäre auf 60°C unter Rühren erhitzt.
Unter fortgesetztem Rühren werden 4,87 g Kaliumpersulfat, gelöst in 209,2 g entmineralisiertem Wasser, zu dieser Lösung gegeben. Nach 15 Minuten werden 211,2 g Ethylacrylat innerhalb von 18 Minuten zugeführt, während sich gleichzeitig die Temperatur von 60 auf 80°C erhöht. Dann erfolgt die Zufuhr der folgenden 3 Zuläufe in 405 Minuten:

a) 1691,3 g Ethylacrylat

b) 3,98 g Kaliumpersulfat, in 170,9 g entmineralisiertem Wasser gelöst,

c) Lösung von 32,95 g Mersolat H95 (Lanxess Deutschland GmbH) und 90,6 g Methacrylamid in 1248,8 g entmineralisiertem Wasser.

Nach Beendigung der Zuläufe a-c) wird die Polymerisation für 60 Minuten bei 80°C unter Rühren fortgesetzt. Danach erfolgt Abkühlen auf Raumtemperatur und Zugabe von 150,9 g entmineralisiertem Wasser.
Der Feststoffgehalt des Latex des agglomerierend wirkenden Copolymers C1 beträgt 40,8 Gew.-%.
Weitere Daten des Copolymers C-1:

| Copolymer | | C-1 |
|---|---|---|
| $d_w$ | nm | 127,0 |
| $d_{10}$ | nm | 110,6 |
| $d_{50}$ | nm | 128,9 |
| $d_{90}$ | nm | 140,8 |
| U | | 0.238 |

Agglomerierend wirkendes Copolymer C-2 (Vergleichsbeispiel):

Die Herstellung des Copolymers C-2 erfolgt mittels Emulsionspolymerisation.
In 1177,2 g entmineralisiertem Wasser werden zuerst 17,83 g Mersolat H95 (Lanxess Deutschland GmbH, Emulgator, $C_{12}$-$C_{18}$-$SO_3^-$ $K^+$) gelöst und in einer Stickstoffatmosphäre auf 60°C unter Rühren erhitzt. Unter fortgesetztem Rühren werden 4,87 g Kaliumpersulfat, gelöst in 209,2 g entmineralisiertem Wasser, zu dieser Lösung gegeben. Nach 15 Minuten werden 211,2 g Ethylacrylat innerhalb von 18 Minuten zugeführt, während sich gleichzeitig die Temperatur von 60 auf 80 ° C erhöht. Dann erfolgt die Zufuhr der folgenden 3 Zuläufe in 405 Minuten:

a) 1691,3 g Ethylacrylat

b) 3,98 g Kaliumpersulfat, in 170,9 g entmineralisiertem Wasser gelöst

c) Lösung von 21,38 g Mersolat H95 (Lanxess Deutschland GmbH) und 90,6 g Methacrylamid in 1248,8 g entmineralisiertem Wasser.

Nach Beendigung der Zuläufe a-c) wird die Polymerisation für 60 Minuten bei 80°C unter Rühren fortgesetzt. Danach erfolgt Abkühlen auf Raumtemperatur und Zugabe von 150,9 g entmineralisiertem Wasser. Der Feststoffgehalt des Latex des agglomerierend wirkenden Copolymers C-2 beträgt 40,0 Gew.-%.
Weitere Daten des Copolymers C-2 (Vergleichsbeispiel):

| Copolymer | | C-2 |
|---|---|---|
| $d_w$ | nm | 99,2 |
| $d_{10}$ | nm | 64,8 |
| $d_{50}$ | nm | 101,4 |
| $d_{90}$ | nm | 127,9 |
| U | | 0,622 |

Agglomerierte Pfropfgrundlage B1

Allgemeine Vorgehensweise:

Zuerst werden 59 Gew.-Teile des Latex der Pfropfgrundlage B1, bezogen auf den Feststoffgehalt des Latex, bei einer Temperatur von 68°C vorgelegt und gerührt. 1,357 Gew.-Teile des Latex des agglomerierend wirkenden Copolymers C (bezogen auf Feststoffe des Latex), werden mit 10,24 Gew.-Teilen entmineralisiertem Wasser verdünnt. Dann wird dieser verdünnte Latex zur Agglomeration der Pfropfgrundlage B1 innerhalb von 25 Minuten unter Rühren zugegeben. Nach 5 Minuten werden 0,56 Gew.-Teile Kaliumstearat, gelöst in 40,98 Gew.-Teilen entmineralisiertem Wasser von 68°C, dem agglomerierten Latex der Pfropfgrundlage B1 unter fortgesetztem Rühren zugesetzt.

Die Teilchengrößenverteilung der agglomerierten Pfropfgrundlage B1 wird gemessen. Nur ein Bruchteil der Teilchen in dem Latex der Pfropfgrundlage B1 wird zu größeren Partikeln agglomeriert. Die Agglomerationsausbeute ist der Anteil der agglomerierten Teilchen in Gew.-% bezogen auf die Gesamtmenge der Teilchen. Die Agglomerationsausbeute wird bestimmt aus der kumulativen Verteilungskurve der Teilchengrößenmessung. Die gewichtsmittlere Teil-chengröße $d_{50}$ und die Polydispersität U der Teilchengrößenverteilung des Anteils der agglomerierten Teilchen (= Fraktion y) in dem erhaltenen agglomerierten Latex der Pfropfgrundlage B wird bestimmt.

Tabelle 2 zeigt die ermittelten Werte.

Tabelle 2

| Agglomerierte Pfropfgrundlage | 1 | 2 | 3 | 4 | 5 | 6 | 7 | 8 |
|---|---|---|---|---|---|---|---|---|
| Beispiel (erfindungsgemäß) | | | x | | x | | | |
| Vergleichsbeispiel | x | x | | x | | x | x | x |
| Pfropfgrundlage B1 | B1-1 | B1-1 | B1-2 | B1-2 | B1-3 | B1-3 | B1-4 | B1-4 |
| Copolymer C | C-1 | C-2 | C-1 | C-2 | C-1 | C-2 | C-1 | C-2 |
| Agglomerationsausbeute (Gew.-%) | 65,8 | 65,7 | 64,3 | 67,8 | 61,8 | 65,0 | 67,6 | 70,9 |
| $d_{50}$-Wert (nm) Fraktion y | 386 | 293 | 390 | 290 | 385 | 289 | 380 | 291 |
| U Fraktion y | 0,23 | 0,66 | 0,24 | 0,82 | 0,22 | 0,64 | 0,26 | 0,64 |

Pfropfcopolymer B

Allgemeine Vorgehensweise:

Nach Beendigung des Agglomerationsschrittes werden 0,074 Gew.-Teile Kaliumpersulfat, gelöst in 3,13 Gew.-Teilen entmineralisiertem Wasser, dem agglomerierten Latex der Pfropfgrundlage B1 bei 68°C unter fortgesetztem Rühren zugesetzt. Ein Monomergemisch von 32,8 Gew.-Teilen Styrol und 8,2 Gew.-Teilen Acrylnitril wird innerhalb von 2 Stunden und 44 Minuten zugegeben, während das Rühren fortgesetzt wird. Innerhalb dieses Zeitraums der Zuführung des Styrol/Acrylnitril-Gemisches wird die Temperatur auf 80°C erhöht. Nach Beendigung der Zuführung des Styrol/Acrylnitril-Gemisches werden 0,074 Gew.-Teile Kaliumpersulfat, gelöst in 3,13 Gew.-Teilen entmineralisiertem Wasser, unter fortgesetztem Rühren zugesetzt. Die Polymerisation wird 80 Minuten bei 80°C fortgesetzt und der erhaltene Latex des Pfropfcopolymers B wird auf Umgebungstemperatur abgekühlt.

Zu dem erhaltenen Pfropflatex werden 0,37 Gew.-Teile einer Dispersion eines Stabilisators (bezogen auf Feststoffe der Dispersion mit einem Feststoffgehalt von 60 Gew.%) zugegeben und anschließend mit 313 Gew.-Teilen einer Magnesiumsulfatlösung mit einem Feststoffgehalt von 1,0 Gew.-% bei einer Temperatur von 80 bis 95°C ausgefällt. Nach dem Filtrieren des Pfropfcopolymers, wird der Niederschlag zweimal mit 550 Gew.-Teilen entmineralisiertem Wasser gewaschen und bei 70°C im Trockenschrank bis zu einer Restfeuchte von weniger als 1 Gew.-% getrocknet.

In der Tabelle 3 werden die Pfropfgrundlage B1 und das agglomerierend wirkende Copolymer C genannt, die zur Herstellung des Pfropfcopolymers B verwendet werden.

Tabelle 3

| Pfropfcopolymer B | B-1 | B-2 | B-3 | B-4 | B-5 | B-6 | B-7 | B-8 |
|---|---|---|---|---|---|---|---|---|
| Beispiel (erfindungsgemäß) | | | x | | x | | | |
| Vergleichsbeispiel | x | x | | x | | x | x | x |

(fortgesetzt)

| Pfropfcopolymer B | B-1 | B-2 | B-3 | B-4 | B-5 | B-6 | B-7 | B-8 |
|---|---|---|---|---|---|---|---|---|
| Pfropfgrundlage | B1-1 | B1-1 | B1-2 | B1-2 | B1-3 | B1-3 | B1-4 | B1-4 |
| agglomerierend wirkendes Copolymer C | C-1 | C-2 | C-1 | C-2 | C-1 | C-2 | C-1 | C-2 |

Thermoplastisches Copolymer A

SAN Polymer: Statistisches Copolymer aus Styrol und Acrylnitril mit einem Verhältnis von Styrol zu Acrylnitril von 75:25 mit einer Viskositätszahl von 64 ml/g (Konzentration 5 g/l in Dimethylformamid bei 20°C gemessen) und einer Schmelzflussrate MVR von 64 [ml/10 min], gemessen bei 220°C und 10 kg Belastung nach ISO 1133, hergestellt durch radikalische Lösungspolymerisation.

Zusatzstoffe D

Silikonöl: Polydimethylsiloxan mit einer kinematischen Viskosität von 30.000 mm$^2$/s

Thermoplastische Formmassen aus SAN-Polymer und einem der Pfropfcopolymere B-1 bis B-8

Das SAN-Polymer und ein Pfropfcopolymer der Pfropfcopolymeren B-1 bis B-8 werden in einem Doppelschneckenextruder mit einem Wellendurchmesser von 25 mm gemischt. In der Extrusionszone wurde die Temperatur auf 200 bis 250°C eingestellt und die Verarbeitung erfolgte bei 700 UpM des Doppelschneckenextruders. Die Batch-Größe für alle Beispiele war 4 kg.

Mit den erhaltenen ABS-Formmassen wurden Tests zur Bestimmung der Fließfähigkeit (MVR), der Charpy-Kerbschlagzähigkeit, des Yellowness Index (YI), und des Oberflächenglanzes durchgeführt. Dabei wurden die oben aufgeführten Testmethoden angewandt.

In Tabelle 4 sind die Testergebnisse zusammengefasst. Die Zusammensetzungen sind in Gewichtsteilen angegeben.

Tabelle 4

| Beispiel | | 1 | 2 | 3 | 4 | 5 | 6 | 7 | 8 |
|---|---|---|---|---|---|---|---|---|---|
| Erfindungsgemäßes Beispiel | | | | x | | x | | | |
| Vergleichsbeispiel | | x | x | | x | | x | x | x |
| Pfropfcopolymer B-1 | | 34 | | | | | | | |
| Pfropfcopolymer B-2 | | | 34 | | | | | | |
| Pfropfcopolymer B-3 | | | | 34 | | | | | |
| Pfropfcopolymer B-4 | | | | | 34 | | | | |
| Pfropfcopolymer B-5 | | | | | | 34 | | | |
| Pfropfcopolymer B-6 | | | | | | | 34 | | |
| Pfropfcopolymer B-7 | | | | | | | | 34 | |
| Pfropfcopolymer B-8 | | | | | | | | | 34 |
| SAN Polymer | | 66 | 66 | 66 | 66 | 66 | 66 | 66 | 66 |
| Silikonöl | | 0,05 | 0,05 | 0,05 | 0,05 | 0,05 | 0,05 | 0,05 | 0,05 |
| Charpy-Kerbschlagzähigkeit, 23°C | [kJ/m$^2$] | 31,0 | 27,8 | 34,0 | 22,5 | 37,4 | 20,3 | 19,1 | 18,8 |
| MVR (220/10) | [ccm/10 min] | 11,6 | 10,6 | 12,0 | 12,2 | 12,3 | 9,9 | 13,4 | 19,0 |
| YI | | 22,4 | 21,1 | 26,6 | 22,5 | 24,5 | 22,6 | 23,0 | 29,3 |
| Glanz, 20° | | 96 | 96 | 94 | 95 | 96 | 97 | 97 | 98 |

Tabelle 4 zeigt, dass die erfindungsgemäßen ABS-Formmassen gemäß Beispiel 3 und 5 eine deutlich verbesserte Kerbschlagzähigkeit bei gleichbleibendem Oberflächenglanz aufweisen.

**Patentansprüche**

1.  Pfropfcopolymer B, aufgebaut aus:

    B1: 40 bis 85 Gew.-%, bezogen auf den Feststoffgehalt des Pfropfcopolymers B, einer Pfropfgrundlage (B1), erhältlich durch (a) Polymerisation von:

    (B11): 10,5 bis 24,5 Gew.-%, bezogen auf die Pfropfgrundlage B1, mindestens eines Vinylaromats, insbesondere Styrol, und
    (B12): 75,5 bis 89,5 Gew.-%, bezogen auf die Pfropfgrundlage B1, mindestens eines Diens, insbesondere Butadien,

    wobei (B11) und (B12) 100 Gew.-% ergeben;

    und (b) Agglomeration der erhaltenen Pfropfgrundlage B1 durch Zugabe von

    (C): 0,01 bis 5 Gew.-Teilen, bezogen auf 100 Gew.-Teile der Pfropfgrundlage B1, jeweils bezogen auf den Feststoffgehalt, eines agglomerierend wirkenden Copolymers (C) aus:

    (C1): 80 bis 99,9 Gew.-% ein oder mehreren $C_1$- bis $C_{12}$-Alkylacrylaten oder $C_1$- bis $C_{12}$-Alkylmethacrylaten und
    (C2): 0,1 bis 20 Gew.-% ein oder mehreren Comonomeren aus der Gruppe bestehend aus Acrylamid, Methylacrylamid, Ethylacrylamid und n-Butylacrylamid,

    wobei (C1) und (C2) 100 Gew.-% ergeben; und

    B2: 15 bis 60 Gew.-%, bezogen auf den Feststoffgehalt des Pfropfcopolymers B, einer Pfropfhülle erhältlich durch Umsetzung der agglomerierten Pfropfgrundlage B1 mit einer Mischung von:

    (B21) 70 bis 90 Gew.-%, bezogen auf die Pfropfhülle (B2), Styrol und/oder $\alpha$-Methylstyrol, insbesondere Styrol, und
    (B22) 10 bis 30 Gew.-%, bezogen auf die Pfropfhülle (B2), Acrylnitril und/oder Methylmethacrylat, insbesondere Acrylnitril,

    wobei die Gesamtsumme aus Pfropfgrundlage B1 und Pfropfhülle B2 100 Gew.-% ergibt;

    **dadurch gekennzeichnet, dass**

    (i) das agglomerierend wirkende Copolymer (C) eine Polydispersität U von 0,26 bis 0,20 und einen $d_{50}$-Wert von 110 bis 140 nm, insbesondere 115 bis 140 nm, aufweist, und
    (ii) die agglomerierte Pfropfgrundlage B1 eine bimodale Teilchengrößenverteilung von einer Fraktion x) nicht agglomerierter Teilchen mit einem $d_{50}$-Wert im Bereich von 80 bis 120 nm und einer Fraktion y) agglomerierter Teilchen mit einem $d_{50}$-Wert im Bereich von 350 bis 450 nm und einer Polydispersität U im Bereich von 0,27 bis 0,20aufweist.

2.  Pfropfcopolymer gemäß Anspruch 1, **dadurch gekennzeichnet, dass** das Copolymer (C) ein Copolymer aus 92 bis 98 Gew.-%, bezogen auf die Gesamtfeststoffe in (C), Ethylacrylat und 2 bis 8 Gew.-%, bezogen auf die Gesamtfeststoffe in (C), Methylacrylamid mit einer Polydispersität U im Bereich von 0,26 bis 0,20, und einem $d_{50}$-Wert von 110 bis 140 nm ist.

3.  Pfropfcopolymer gemäß Anspruch 1, **dadurch gekennzeichnet, dass** das Pfropfcopolymer B, aufgebaut ist aus:

    B1: 40 bis 85 Gew.-%, bezogen auf den Feststoffgehalt des Pfropfcopolymers B, einer Pfropfgrundlage (B1), erhältlich durch (a) Polymerisation von:

(B11): 10,5 bis 24,5 Gew.-%, bezogen auf die Pfropfgrundlage B1, Styrol, und

(B12): 75,5 bis 89,5 Gew.-%, bezogen auf die Pfropfgrundlage B1, Butadien,

wobei (B11) und (B12) 100 Gew.-% ergeben;

und (b) Agglomeration der erhaltenen Pfropfgrundlage B1 durch Zugabe von

(C): 0,01 bis 5 Gew.-Teilen, bezogen auf 100 Gew.-Teile der Pfropfgrundlage B1, jeweils bezogen auf den Feststoffgehalt, eines agglomerierend wirkenden Copolymers (C) aus:

(C1): 80 bis 99,9 Gew.-% Ethylacrylat und

(C2): 0,1 bis 20 Gew.-% Methylacrylamid,

wobei (C1) und (C2) 100 Gew.-% ergeben; und

B2: 15 bis 60 Gew.-%, bezogen auf den Feststoffgehalt des Pfropfcopolymers B, einer Pfropfhülle erhältlich durch Umsetzung der agglomerierten Pfropfgrundlage B1 mit einer Mischung von:

(B21) 70 bis 90 Gew.-%, bezogen auf die Pfropfhülle B2, Styrol, und

(B22) 10 bis 30 Gew.-%, bezogen auf die Pfropfhülle B2, Acrylnitril,

wobei die Gesamtsumme aus Pfropfgrundlage B1 und Pfropfhülle B2 100 Gew.-% ergibt;

**dadurch gekennzeichnet, dass**

(i) das agglomerierend wirkende Copolymer (C) eine Polydispersität U von 0,26 bis 0,20 und einen $d_{50}$-Wert von 110 bis 140 nm, insbesondere 115 bis 140 nm aufweist, und

(ii) die agglomerierte Pfropfgrundlage B1 eine bimodale Teilchengrößenverteilung von einer Fraktion x) nicht agglomerierter Teilchen mit einem $d_{50}$-Wert im Bereich von 80 bis 120 nm und einer Fraktion y) agglomerierter Teilchen mit einem $d_{50}$-Wert im Bereich von 350 bis 450 nm und einer Polydispersität U von 0,27 bis 0,20 aufweist.

4. Pfropfcopolymer gemäß einem der Ansprüche 1 bis 3, **dadurch gekennzeichnet, dass** das Copolymer (C) ein Copolymer aus 92 bis 98 Gew.-% Ethylacrylat und 2 bis 8 Gew.-% Methylacrylamid mit einer Polydispersität U im Bereich von 0,25 bis 0,21 und einem $d_{50}$-Wert von 115 bis 140 nm ist.

5. Verfahren zur Herstellung eines Pfropfcopolymers B gemäß einem der Ansprüche 1 bis 4 durch:

(i) Polymerisieren der Monomeren B12 und B11 in wässriger Emulsion zu einer teilchenförmigen Pfropfgrundlage B1,

(ii) Agglomeration der in einer Emulsion vorliegenden teilchenförmigen Pfropfgrundlage B1 mittels eines agglomerierend wirkenden Copolymers (C), wobei das Copolymer (C) eine Polydispersität U von 0,26 bis 0,20 und einen $d_{50}$-Wert von 110 bis 140 nm, insbesondere 115 bis 140 nm, aufweist, zu einer agglomerierten teilchenförmigen Pfropfgrundlage B1, und nachfolgend

(iii) Polymerisieren der Monomeren B21 und B22 der Pfropfhülle in wässriger Emulsion in Gegenwart der agglomerierten teilchenförmigen Pfropfgrundlage B1.

6. Verfahren gemäß Anspruch 5, wobei Schritt (i) **gekennzeichnet ist durch**:

(i) Polymerisieren der Monomeren B12 und B11 in wässriger Emulsion zu einer teilchenförmigen Pfropfgrundlage B1, wobei

(i-I) zunächst nur Monomer (B11) in einer Menge von 3 bis 10 Gew.-%, in Bezug auf die Gesamtmonomermenge (B11) und (B12), polymerisiert wird, und

(i-II) danach eine Mischung aus Monomer (B12) und dem restlichen Monomer (B11) polymerisiert wird.

7. Thermoplastische Formmasse, enthaltend
ein thermoplastisches Copolymer A und ein Pfropfcopolymer B gemäß einem der Ansprüche 1 bis 4 sowie gegebenenfalls weitere Komponenten K, wobei die Formmasse enthält:

A: 40 bis 80 Gew.-% mindestens eines thermoplastischen Copolymers A erhältlich aus:

A1: 20 bis 31 Gew.-%, bezogen auf das Copolymer A, Acrylnitril, und
A2: 69 bis 80 Gew.-%, bezogen auf das Copolymer A, Styrol oder $\alpha$-Methylstyrol oder einer Mischung aus Styrol und $\alpha$-Methylstyrol,

B: 20 bis 60 Gew.-% des Pfropfcopolymers B;
und
K: 0 bis 5 Gew.-% weitere Komponenten K,

wobei die Summe aus A, B und K 100 Gew.-% ergibt.

8. Thermoplastische Formmasse gemäß Anspruch 7, **dadurch gekennzeichnet, dass** das Copolymer A aus den Monomeren Styrol und Acrylnitril aufgebaut ist.

9. Thermoplastische Formmasse gemäß Anspruch 7 oder 8, **dadurch gekennzeichnet, dass** sie zusätzlich mindestens ein weiteres thermoplastisches Polymer (TP), ausgewählt aus der Gruppe der Polycarbonate, Polyestercarbonate, Polyester und Polyamide enthält.

10. Verwendung einer thermoplastischen Formmasse gemäß einem der Ansprüche 7 bis 9 zur Herstellung von Formteilen.

11. Verfahren zur Herstellung von Copolymeren (C) gemäß Anspruch 1, die einen Kern aufweisen, der aus mindestens einem der als Komponente (C1) genannten Monomere aufgebaut ist, wobei dieser Kern mit einem Copolymer gepfropft ist, das aus den Komponenten (C1) und (C2) aufgebaut ist, durch eine Emulsionspolymerisation umfassend die Schritte:

(x) Emulsionspolymerisation mindestens eines Monomeren (C1) in einem ersten Schritt und
(y) Zugabe eines Monomerengemisches umfassend Monomere (C1 + C2) in einem weiteren Schritt,

**dadurch gekennzeichnet, dass** die Schritte (x) und (y) in Gegenwart mindestens eines Emulgators erfolgen, der in Schritt (x) in einer Menge von 0,05 bis 0,50 Gew.-%,
und in Schritt (y) in einer Menge von 0,45 bis 4,50 Gew, jeweils bezogen auf den Gesamtmonomergehalt, eingesetzt wird.

12. Copolymer (C), erhältlich durch das Verfahren gemäß Anspruch 11.

**Claims**

1. A graft copolymer B constructed from:

B1: 40 to 85 wt%, based on the solids content of the graft copolymer B, of a graft substrate (B1) obtainable by (a) polymerizing:

(B11): 10.5 to 24.5 wt%, based on the graft substrate B1, of at least one vinylaromatic, in particular styrene, and
(B12): 75.5 to 89.5 wt%, based on the graft substrate B1, of at least one diene, in particular butadiene,

where (B11) and (B12) sum to 100 wt%;

and (b) agglomerating the obtained graft substrate B1 by adding

(C): 0.01 to 5 parts by weight, based on 100 parts by weight of the graft substrate B1, in each case based on the solids content, of an agglomerating copolymer (C) of:

(C1): 80 to 99.9 wt% of one or more $C_1$ to $C_{12}$ alkyl acrylates or $C_1$ to $C_{12}$ alkyl methacrylates and
(C2): 0.1 to 20 wt% of one or more comonomers from the group consisting of acrylamide, methylacrylamide, ethylacrylamide and n-butylacrylamide,

where (C1) and (C2) sum to 100 wt%; and

B2: 15 to 60 wt%, based on the solids content of the graft copolymer B, of a graft sheath obtainable by reacting the agglomerated graft substrate B1 with a mixture of:

(B21) 70 to 90 wt%, based on the graft sheath (B2), of styrene and/or $\alpha$-methylstyrene, in particular styrene, and
(B22) 10 to 30 wt%, based on the graft sheath (B2), of acrylonitrile and/or methyl methacrylate, in particular acrylonitrile,

where the graft substrate B1 and the graft sheath B2 sum to 100 wt% in total;

**characterized in that**

(i) the agglomerating copolymer (C) has a polydispersity U of from 0.26 to 0.20 and a $d_{50}$ value of from 110 to 140 nm, in particular 115 to 140 nm, and
(ii) the agglomerated graft substrate B1 has a bimodal particle size distribution of a fraction x) of nonagglomerated particles having a $d_{50}$ value in the range of from 80 to 120 nm and a fraction y) of agglomerated particles having a $d_{50}$ value in the range of from 350 to 450 nm and a polydispersity U in the range of from 0.27 to 0.20.

2. The graft copolymer according to claim 1, **characterized in that** the copolymer (C) is a copolymer of 92 to 98 wt%, based on the total solids in (C), of ethyl acrylate and 2 to 8 wt%, based on the total solids in (C), of methylacrylamide having a polydispersity U in the range of from 0.26 to 0.20 and a $d_{50}$ value of from 110 to 140 nm.

3. The graft copolymer according to claim 1, **characterized in that** the graft copolymer is constructed from:

B1: 40 to 85 wt%, based on the solids content of the graft copolymer B, of a graft substrate (B1) obtainable by
(a) polymerizing:

(B11): 10.5 to 24.5 wt%, based on the graft substrate B1, of styrene, and
(B12): 75.5 to 89.5 wt%, based on the graft substrate B1, of butadiene,

where (B11) and (B12) sum to 100 wt%;
and (b) agglomerating the obtained graft substrate B1 by adding

(C): 0.01 to 5 parts by weight, based on 100 parts by weight of the graft substrate B1, in each case based on the solids content, of an agglomerating copolymer (C) of:

(C1): 80 to 99.9 wt% of ethyl acrylate and
(C2): 0.1 to 20 wt% of methylacrylamide,

where (C1) and (C2) sum to 100 wt%; and

B2: 15 to 60 wt%, based on the solids content of the graft copolymer B, of a graft sheath obtainable by reacting the agglomerated graft substrate B1 with a mixture of:

(B21) 70 to 90 wt%, based on the graft sheath B2, of styrene, and
(B22) 10 to 30 wt%, based on the graft sheath B2, of acrylonitrile,

where the graft substrate B1 and the graft sheath B2 sum to 100 wt% in total;

**characterized in that**

(i) the agglomerating copolymer (C) has a polydispersity U of from 0.26 to 0.20 and a $d_{50}$ value of from 110 to 140 nm, in particular 115 to 140 nm, and
(ii) the agglomerated graft substrate B1 has a bimodal particle size distribution of a fraction x) of nonagglomerated

particles having a $d_{50}$ value in the range of from 80 to 120 nm and a fraction y) of agglomerated particles having a value in the range of from 350 to 450 nm and a polydispersity U of from 0.27 to 0.20.

4. The graft copolymer according to any of claims 1 to 3, **characterized in that** the copolymer (C) is a copolymer of 92 to 98 wt% of ethyl acrylate and 2 to 8 wt% of methylacrylamide having a polydispersity U in the range of from 0.25 to 0.21 and a $d_{50}$ value of from 115 to 140 nm.

5. A process for producing a graft copolymer B according to any of claims 1 to 4 by:

   (i) polymerizing the monomers B12 and B11 in aqueous emulsion to afford a particulate graft substrate B1,
   (ii) agglomerating the particulate graft substrate B1 which is in the form of an emulsion using an agglomerating copolymer (C), wherein the copolymer (C) has a polydispersity U of from 0.26 to 0.20 and a value of from 110 to 140 nm, in particular 115 to 140 nm, to afford an agglomerated particulate graft substrate B1 and subsequently
   (iii) polymerizing the monomers B21 and B22 of the graft sheath in aqueous emulsion in the presence of the agglomerated particulate graft substrate B1.

6. The process according to claim 5, wherein step (i) is **characterized by**:

   (i) polymerizing the monomers B12 and B11 in aqueous emulsion to afford a particulate graft substrate B1, wherein

      (i-I) initially only monomer (B11) is polymerized in an amount of from 3 to 10 wt%, based on the total monomer amount (B11) and (B12), and
      (i-II) subsequently a mixture of monomer (B12) and the remaining monomer (B11) is polymerized.

7. A thermoplastic molding compound comprising
   a thermoplastic copolymer A and a graft copolymer B according to any of claims 1 to 4 and optionally further components K, wherein the molding compound comprises:

   A: 40 to 80 wt% of at least one thermoplastic copolymer A obtainable from:

      A1: 20 to 31 wt%, based on the copolymer A, of acrylonitrile and
      A2: 69 to 80 wt%, based on the copolymer A, of styrene or $\alpha$-methylstyrene or a mixture of styrene and $\alpha$-methylstyrene,

   B: 20 to 60 wt% of the graft copolymer B;
   and
   K: 0 to 5 wt% of further components K,

   where the components A, B and K sum to 100 wt%.

8. The thermoplastic molding compound according to claim 7, **characterized in that** the copolymer A is constructed from the monomers styrene and acrylonitrile.

9. The thermoplastic molding compound according to either of claims 7 and 8, **characterized in that** said compound additionally comprises at least one further thermoplastic polymer (TP) selected from the group of polycarbonates, polyester carbonates, polyesters and polyamides.

10. The use of a thermoplastic molding compound according to any of claims 7 to 9 for producing molded articles.

11. A process for producing copolymers (C) according to claim 1 and comprising a core constructed from at least one of the monomers cited as component (C1), wherein this core is grafted with a copolymer constructed from the components (C1) and (C2) by an emulsion polymerization comprising the steps of:

   (x) emulsion polymerizing at least one monomer (C1) in a first step and
   (y) adding a monomer mixture comprising monomers (C1 + C2) in a further step,

   **characterized in that** the steps (x) and (y) are performed in the presence of at least one emulsifier which is employed in an amount of from 0.05 to 0.50 wt% in step (x)
and in an amount of from 0.45 to 4.50 wt% in step (y), in each case based on the total monomer content.

**12.** A copolymer (C) obtainable by the process according to claim 11.

**Revendications**

**1.** Copolymère greffé B, constitué de :

B1: 40 à 85% en poids, exprimés par rapport à l'extrait sec du copolymère greffé B, d'une base de greffage (B1) pouvant être obtenue par

(a) polymérisation de:

(B11): 10,5 à 24,5% en poids, exprimés par rapport à la base de greffage B1, d'au moins un composé vinylaromatique, en particulier de styrène, et
(B12): 75,5 à 89,5% en poids, exprimés par rapport à la base de greffage B1, d'au moins un diène, en particulier le butadiène,

la somme de (B11) et de (B12) formant 100% en poids ; et
(b) agglomération de la base de greffage B1 obtenue,

par addition de (C): 0,01 à 5 parties en poids, exprimés par rapport à 100 parties en poids de la base de greffage B1,
dans chaque cas exprimés par rapport à l'extrait sec, d'un copolymère (C) ayant une action d'agglomération, constitué de:

(C1): 80 à 99,9% en poids d'un ou plusieurs acrylates d'alkyle en $C_1$ à $C_{12}$ ou de méthacrylates d'alkyle en $C_1$ à $C_{12}$, et
(C2): 0,1 à 20% en poids d'un ou plusieurs comonomères du groupe constitué par l'acrylamide, le méthylacrylamide, l'éthylacrylamide et le n-butylacrylamide,

la somme de (C1) et de (C2) formant 100% en poids ; et

B2: 15 à 60% en poids, exprimés par rapport à l'extrait sec du copolymère greffé B, d'une enveloppe de greffage pouvant être obtenue par réaction de la base de greffage B1 agglomérée avec un mélange de :

(B21): 70 à 90% en poids, exprimés par rapport à l'enveloppe de greffage (B2), de styrène et/ou d'a-méthylstyrène, en particulier de styrène, et
(B22): 10 à 30% en poids, exprimés par rapport à l'enveloppe de greffage (B2), d'acrylonitrile et/ou de méthacrylate de méthyle, en particulier d'acrylonitrile,

la somme totale de la base de greffage B1 et de l'enveloppe de greffage B2 formant 100% en poids,

**caractérisé en ce que**:

(i) le copolymère (C) ayant une action d'agglomération présente une polydispersité U comprise dans la plage de 0,26 à 0,20 et une valeur $d_{50}$ de 110 à 140 nm, en particulier de 115 à 140 nm, et
(ii) la base de greffage agglomérée B1 présente une distribution granulométrique bimodale, constituée d'une fraction x) de particules non agglomérées présentant une $d_{50}$ comprise dans la plage de 80 à 120 nm, et constituée d'une fraction y) de particules agglomérées présentant une $d_{50}$ comprise dans la plage de 350 à 450 nm et une polydispersité U comprise dans la plage de 0,27 à 0,20,

**2.** Copolymère greffé selon la revendication 1, **caractérisé en ce que** le copolymère (C) est un copolymère constitué pour 92 à 98% en poids, exprimés par rapport à l'extrait sec total de (C), d'acrylate d'éthyle, et de 2 à 8% en poids, exprimés par rapport à l'extrait sec total de (C), de méthylacrylamide, avec une polydispersité U comprise dans la plage de 0,26 à 0,20 et une $d_{50}$ de 110 à 140 nm.

**3.** Copolymère greffé selon la revendication 1, **caractérisé en ce que** le copolymère greffé (B) est constitué de:

B1: 40 à 85% en poids, exprimés par rapport à l'extrait sec du copolymère greffé B, d'une enveloppe de greffage (B1) pouvant être obtenue par

(a) polymérisation de:

(B11): 10,5 à 24,5% en poids, exprimés par rapport à la base de greffage B1, de styrène, et
(B12): 75,5 à 89,5% en poids, exprimés par rapport à la base de greffage B1, de butadiène,

la somme de (B11) et de (B12) formant 100% en poids; et
b) agglomération de la base de greffé B1 obtenue, par addition de (C):

de 0,01 à 5 parties en poids pour 100 parties en poids de la base de greffage B1, dans chaque cas exprimés par rapport à l'extrait sec, d'un copolymère (C) ayant une action d'agglomération, constitué de:

(C1): 80 à 99,9% en poids d'acrylate d'éthyle, et
(C2): 0,1 à 20% en poids d'un méthylacrylamide,

la somme de (C1) et de (C2) formant 100% en poids ; et

B2: 15 à 60% en poids, exprimés par rapport à l'extrait sec du copolymère greffé B, d'une enveloppe de greffage pouvant être obtenue par réaction de la base de greffage agglomérée B1 avec un mélange de:

(B21): 70 à 90% en poids, exprimés par rapport à l'enveloppe de greffage B2, de styrène, et
(B22): 10 à 30% en poids, exprimés par rapport à l'enveloppe de greffage B2, d'acrylonitrile,

la somme totale de la base de greffage B1 et de l'enveloppe de greffage B2 formant 100% en poids ;

**caractérisé en ce que**

(i) le copolymère (C) ayant une action d'agglomération présente une polydispersité U de 0,26 à 0,20 et une $d_{50}$ de 115 à 140 nm, et
(ii) la base de greffage agglomérée B1 présente une distribution granulométrique bimodale, constituée d'une fraction x) de particules non agglomérées présentant une $d_{50}$ comprise dans la plage de 80 à 120 nm, et constituée d'une fraction y) de particules agglomérées présentant une $d_{50}$ comprise dans la plage de 350 à 450 nm, et une polydispersité U comprise dans la plage de 0,27 à 0,20.

**4.** Copolymère greffé selon l'une des revendications 1 à 3, **caractérisé en ce que** le copolymère (C) est un copolymère constitué pour 92 à 98% en poids d'acrylate d'éthyle et de 2 à 8% en poids de méthylacrylamide, présentant une polydispersité U comprise dans la plage de 0,25 à 0,21 et une $d_{50}$ de 115 à 140 nm.

**5.** Procédé de préparation d'un copolymère greffé B selon l'une des revendications 1 à 4,
par:

(i) polymérisation des monomères B12 et B11 en émulsion aqueuse pour donner une base de greffage particulaire B1,
(ii) agglomération de la base de greffage particulaire B1 en émulsion obtenue, à l'aide d'un copolymère (C) ayant une action d'agglomération, le copolymère (C) présentant une polydispersité U de 0,26 à 0,20 et une $d_{50}$ de 110 à 140 nm, en particulier de 115 à 140 nm, pour donner une base de greffage particulaire agglomérée B1, puis
(iii) polymérisation des monomères B21 et B22 de l'enveloppe de greffage en émulsion aqueuse en présence de la base de greffage particulaire agglomérée B1.

**6.** Procédé selon la revendication 5, dans lequel l'étape (i) est **caractérisée en ce que** :

(i) on polymérise les monomères B12 et B11 en émulsion aqueuse pour obtenir une base de greffage particulaire B1,

(i-I) dans un premier temps seul le monomère (B11) est polymérisé dans une quantité de 3 à 10% en poids exprimés par rapport à la quantité totale des monomères (B11) et (B12), et
(i-II) ensuite un mélange du monomère (B12) et du monomère (B11) restant est polymérisé.

7. Mélange thermoplastique à mouler, contenant un copolymère thermoplastique A et un copolymère greffé B selon l'une des revendications 1 à 4, ainsi qu'éventuellement des composants K supplémentaires, le mélange à mouler contenant:

A: 40 à 80% en poids d'au moins un copolymère thermoplastique A pouvant être obtenu à partir de:

A1: 20 à 31% en poids, exprimés par rapport au copolymère A, d'acrylonitrile, et
A2: 69 à 80% en poids, exprimés par rapport au copolymère A, de styrène et d'a-méthylstyrène ou d'un mélange de styrène et d'a-méthylstyrène,

B: 20 à 60% en poids du copolymère greffé B ; et
K: 0 à 5% en poids de composants supplémentaires K,

la somme de A, de B et de K formant 100% en poids.

8. Mélange thermoplastique à mouler selon la revendication 7, **caractérisé en ce que** le copolymère A est constitué des monomères styrène et acrylonitrile.

9. Mélange thermoplastique à mouler selon la revendication 7 ou 8, **caractérisé en ce qu'**il contient en outre au moins un polymère thermoplastique (TP) supplémentaire choisi dans le groupe des polycarbonates, des polyestercarbonates, des polyesters et des polyamides.

10. Utilisation d'un mélange thermoplastique à mouler selon l'une des revendications 7 à 9, pour la fabrication d'objets moulés.

11. Procédé de fabrication de copolymères (C) selon la revendication 1, qui comprennent un noyau, lequel est constitué d'au moins l'un des monomères mentionnés en tant que composant (C1), ce noyau étant greffé avec un copolymère qui est constitué des composants (C1) et (C2), par une polymérisation en émulsion comprenant les étapes:

(x) dans une première étape, de polymérisation en émulsion d'au moins un monomère (C1), et
(y) dans une étape supplémentaire, l'addition d'un mélange de monomères comprenant les monomères (C1 + C2)

**caractérisé en ce que** les étapes (x) et (y) sont mises en oeuvre en présence d'au moins un émulsifiant, qui dans l'étape (x) est utilisé en une quantité de 0,05 à 0,50% en poids et dans l'étape (y) est utilisé en une quantité de 0,45 à 4,50% en poids, toutes ces quantités étant exprimées par rapport à la quantité totale de monomères.

12. Copolymère (C) pouvant être obtenu par le procédé selon la revendication 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0022200 A
- EP 0077038 A
- EP 1305345 A
- WO 2008020012 A
- DE 102005022632 A1
- DE 102005022635 A1
- DE 2427960 A

- EP 0062901 A
- DE 2407647
- DE 2407776
- DE 2715932
- DE 1900270
- US 3692744 A
- DE 19907136 A


**In der Beschreibung aufgeführte Nicht-Patentliteratur**

- Kolloidik feinverteilter Stoffe einschließlich der Tonminerale. Steinkopf-Verlag, 1997, 282
- Kunststoff-Handbuch. Polystyrol. Carl-Hanser-Verlag, 1969, vol. V, 122 f
- Kunststoff-Handbuch. Carl Hanser Verlag, 1973, vol. VIII, 695 ff

- Plastics Additives Handbook. Hanser Publ, 1996
- Methoden der Organischen Chemie. **HOUBEN-WEYL.** Makromolekulare Stoffe. Thieme Verlag, 1961, 307